(19) Europäisches Patentamt
European Patent Office
Office européen des brevets

(11) EP 4 517 435 B1

(12) **EUROPEAN PATENT SPECIFICATION**

(45) Date of publication and mention of the grant of the patent:
**25.03.2026 Bulletin 2026/13**

(21) Application number: **24193272.2**

(22) Date of filing: **07.08.2024**

(51) International Patent Classification (IPC):
***G03G 15/16*** *(2006.01)* ***G03G 15/20*** *(2006.01)*

(52) Cooperative Patent Classification (CPC):
**G03G 15/162; G03G 15/1685; G03G 15/2057**

(54) **FILM, MEMBER, TRANSFER MEMBER, TRANSFER DEVICE, FIXING DEVICE, AND IMAGE FORMING APPARATUS**

FILM, ELEMENT, ÜBERTRAGUNGSELEMENT, ÜBERTRAGUNGSVORRICHTUNG, FIXIERVORRICHTUNG UND BILDERZEUGUNGSVORRICHTUNG

FILM, ÉLÉMENT, ÉLÉMENT DE TRANSFERT, DISPOSITIF DE TRANSFERT, DISPOSITIF DE FIXATION ET APPAREIL DE FORMATION D'IMAGE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.08.2023 JP 2023134467**
**30.05.2024 JP 2024088367**

(43) Date of publication of application:
**05.03.2025 Bulletin 2025/10**

(73) Proprietor: **FUJIFILM Business Innovation Corp.**
**Minato-ku**
**Tokyo (JP)**

(72) Inventors:
- **OMORI, Kenji**
  **Ebina-shi, Kanagawa (JP)**
- **KUBO, Yosuke**
  **Ebina-shi, Kanagawa (JP)**
- **ONO, Masato**
  **Ebina-shi, Kanagawa (JP)**
- **NISHIMURA, Iori**
  **Ebina-shi, Kanagawa (JP)**
- **TANEMURA, Daisuke**
  **Ebina-shi, Kanagawa (JP)**
- **SEKO, Masayuki**
  **Ebina-shi, Kanagawa (JP)**
- **KIMURA, Jun**
  **Ebina-shi, Kanagawa (JP)**

(74) Representative: **Kurig, Thomas**
**Becker Kurig & Partner**
**Patentanwälte mbB**
**Bavariastraße 7**
**80336 München (DE)**

(56) References cited:
**EP-A1- 0 556 953**
**US-A- 5 778 295**
**US-A1- 2012 257 914**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 517 435 B1

## Description

BACKGROUND OF THE INVENTION

(i) Field of the Invention

The present invention relates to a film, a member, a transfer member, a transfer device, a fixing device, and an image forming apparatus.

(ii) Description of Related Art

In an image forming apparatus (such as a copy machine, a facsimile machine, or a printer) using an electrophotographic method, a toner image formed on the surface of an image holder is transferred to the surface of a recording medium and fixed on the recording medium such that an image is formed.

In the image forming apparatus, a member having a peelability on a surface is used.

For example, JP2010-262290A discloses "a fuser member including a substrate and an outermost layer formed on the substrate, in which the outermost layer contains a plurality of silsesquioxane-based particles and a plurality of carbon nanotubes, which are dispersed in a polymer matrix".

JP2017-97279A discloses "a fixing member including a substrate, an elastic layer, a resin layer, and a release layer in this order, in which an MD-1 TypeC hardness of a surface of the release layer is 65 or more and 90 or less, a hardness of a surface of the release layer of a laminate obtained by removing the substrate and the elastic layer from the fixing member by a nanoindenter method is 0.3 GPa or more and 2.5 GPa or less, and a linear expansion coefficient of the resin layer is $1.0 \times 10^{-4}$/°C or less".

US 2012/257914 A1 discloses composite materials and fixing members that contain silsesquioxane-based particles.

SUMMARY OF THE INVENTION

An object of the present invention is to provide a film containing a resin and particles of a siloxane compound which has a structure represented by Formula: $[RSiO_{1.5}]_n$ (in the formula, R represents an organic group and n represents an integer of 2 or more), where at least one R in the formula includes an alkyl group, in which a surface of the film exhibits high oil repellency even in a high temperature environment as compared with a case where, in a spatial distribution of the particles present in an evaluation region of 63 μm × 42 μm, an integrated value of a statistical quantity L(r) represented by Equation (1) in an interparticle distance r of 0.05 μm or more and 5.00 μm or less is more than 1.6.

The present invention is defined in the appended claims. The following disclosure serves a better understanding of the present invention. Means for achieving the above object include the following aspects.

<1> According to a first aspect of the present disclosure, as defined by the independent claim, there is provided a film comprising a resin, and particles of a siloxane compound having a structure represented by Formula: $[RSiO_{1.5}]_n$ (in the formula, R represents an organic group and n represents an integer of 2 or more), where at least one R in the formula is a group including an alkyl group, in which in a spatial distribution of the particles present in an evaluation region of 63 μm × 42 μm, an integrated value of a statistical quantity L(r) represented by Equation (1) in an interparticle distance r of 0.05 μm or more and 5.00 μm or less is 0 or more and 1.6 or less.

$$L(r) := \sqrt{K(r)/\pi} - r \qquad (1)$$

In Equation (1), r represents the interparticle distance, and K(r) represents a Ripley's K function K(r) represented by Equation (2).

$$K(r) := \frac{\sum_{i \neq j}^{N} 1(|X_i - X_j| \leq r)/s(|X_i - X_j|)}{\lambda^2} \qquad (2)$$

In Equation (2), $1(|X_i - X_j| \leq r)$ represents an indicator function, $X_i$ and $X_j$ represent coordinates of points i and j respectively, $|X_i - X_j|$ represents a Euclidean distance between the coordinates $X_i$ and $X_j$, r represents the interparticle distance, $s(|X_i - X_j|)$ represents an edge correction factor s(x) of an evaluation region represented by Equation (3), x equals $|X_i - X_j|$, N represents a total number of particles in the evaluation region, and $\lambda$ represents a number density of particles in the evaluation region.

$$s(x) := L_x L_y - \frac{x}{\pi}(2L_x + 2L_y - x) \quad (3)$$

In Equation (3), $L_x$ and $L_y$ represent lengths (μm) of sides of the evaluation region in an x-axis direction and a y-axis direction respectively, and $x = |X_i - X_j|$ is satisfied, where the $X_i$ and the $X_j$ represent coordinates of points i and j respectively, and the $|X_i - X_j|$ represents a Euclidean distance between the coordinates $X_i$ and $X_j$.

<2> According to a second aspect of the present disclosure, there is provided the film according to the first aspect, in which an average particle diameter of the particles may be 0.05 μm or more and 3.0 μm or less.
<3> According to a third aspect of the present disclosure, there is provided the film according to the second aspect, in which an average particle diameter of the particles may be 0.05 μm or more and 1.0 μm or less.
<4> According to a fourth aspect of the present disclosure, there is provided the film according to the first aspect, in which the content of the particles may be 1% by mass or more and 50% by mass or less with respect to the mass of the resin.
<5> According to a fifth aspect of the present disclosure, there is provided the film according to the fourth aspect, in which the content of the particles may be 1% by mass or more and 10% by mass or less with respect to the mass of the resin.
<6> According to a sixth aspect of the present disclosure, there is provided the film according to any one of the first to fifth aspects, in which a peel strength of a surface at 140°C may be 24 kPa or less.
<7> According to a seventh aspect of the present disclosure, there is provided a member having the film according to any one of the first to sixth aspects as a layer constituting an outer surface of the member.
<8> According to an eighth aspect of the present disclosure, there is provided a transfer member having the film according to any one of the first to sixth aspects as a layer constituting an outer surface of the transfer member, in which the film further contains conductive particles.
<9> According to a ninth aspect of the present disclosure, there is provided a fixing device including a first rotary member and a second rotary member that is disposed to be in contact with an outer surface of the first rotary member, in which at least one of the first rotary member or the second rotary member is constituted of the member according to the seventh aspect.
<10> According to a tenth aspect of the present disclosure, there is provided an image forming apparatus including an image holder, a charging device that charges a surface of the image holder, an electrostatic latent image forming device that forms an electrostatic latent image on the charged surface of the image holder, a developing device that accommodates a developer containing a toner and develops the electrostatic latent image formed on the surface of the image holder with the developer to form a toner image, a transfer device that transfers the toner image onto a surface of a recording medium, and the fixing device according to the ninth aspect that fixes the toner image on the surface of the recording medium.
<11> According to an eleventh aspect of the present disclosure, there is provided a transfer device including an intermediate transfer body that is constituted of the member according to the seventh aspect and has an outer peripheral surface to which a toner image is transferred, a primary transfer device in which a toner image formed on a surface of an image holder is primarily transferred to a surface of the intermediate transfer body, and a secondary transfer device in which the toner image transferred to the surface of the intermediate transfer body is secondarily transferred to a surface of a recording medium.
<12> According to a twelfth aspect of the present disclosure, there is provided a transfer device including an intermediate transfer body that is constituted of the transfer member according to the eighth aspect and has an outer peripheral surface to which a toner image is transferred, a primary transfer device in which a toner image formed on a surface of an image holder is primarily transferred to a surface of the intermediate transfer body, and a secondary transfer device in which the toner image transferred to the surface of the intermediate transfer body is secondarily transferred to a surface of a recording medium.
<13> According to a thirteenth aspect of the present disclosure, there is provided an image forming apparatus including an image holder, a charging device that charges a surface of the image holder, an electrostatic latent image

forming device that forms an electrostatic latent image on the charged surface of the image holder, a developing device that accommodates a developer containing a toner and develops the electrostatic latent image formed on the surface of the image holder with the developer to form a toner image, the transfer device according to the eleventh or twelfth aspect that transfers the toner image onto a surface of a recording medium, and a fixing device that fixes the toner image on the surface of the recording medium.

According to <1>, there is provided a film containing a resin, and particles of a siloxane compound having a structure represented by Formula: $[RSiO_{1.5}]_n$ (in the formula, R represents an organic group and n represents an integer of 2 or more), where at least one R in the formula is a group including an alkyl group, in which a surface of the film exhibits high oil repellency even in a high temperature environment as compared with a case where, in a spatial distribution of the particles present in an evaluation region of 63 $\mu$m $\times$ 42 $\mu$m, an integrated value of a statistical quantity L(r) represented by Equation (1) in an interparticle distance r of 0.05 $\mu$m or more and 5.00 $\mu$m or less is more than 1.6.

According to <2>, there is provided a film in which a surface exhibits high oil repellency even in a high temperature environment as compared with a case where the average particle diameter of the particles is more than 3.0 $\mu$m.

According to <3>, there is provided a film in which a surface exhibits high oil repellency even in a high temperature environment as compared with a case where the average particle diameter of the particles is more than 1.0 $\mu$m and 3.0 $\mu$m or less.

According to <4>, there is provided a film in which a surface exhibits high oil repellency even in a high temperature environment as compared with a case where the content of the particles with respect to the resin is more than 50% by mass.

According to <5>, there is provided a film in which a surface exhibits high oil repellency even in a high temperature environment as compared with a case where the content of the particles with respect to the resin is more than 10% by mass and 50% by mass or less.

According to <6>, there is provided a film in which a surface exhibits high oil repellency even in a high temperature environment as compared with a case where the peel strength of the surface of the film at 140°C is more than 24 kPa.

According to <7>, <8>, <9>, <10>, <11>, <12>, and <13>, there is provided; a member or a transfer member containing a resin, and particles of a siloxane compound having a structure represented by Formula: $[RSiO_{1.5}]_n$ (in the formula, R represents an organic group and n represents an integer of 2 or more), where at least one R in the formula is a group including an alkyl group, in which a surface of the film exhibits high oil repellency even in a high temperature environment as compared with a case where, in a spatial distribution of the particles present in an evaluation region of 63 $\mu$m $\times$ 42 $\mu$m, an integrated value of a statistical quantity L(r) represented by Equation (1) in an interparticle distance r of 0.05 $\mu$m or more and 5.00 $\mu$m or less is more than 1.6; a transfer device and an image forming apparatus including the intermediate transfer body constituted of the member or the transfer member; and a fixing device and an image forming apparatus including a rotary member constituted of the member.

## BRIEF DESCRIPTION OF THE DRAWINGS

Exemplary embodiment(s) of the present invention will be described in detail based on the following figures, wherein:

Fig. 1 is a schematic configuration view showing an example of a first exemplary embodiment of a fixing device according to the present exemplary embodiment;

Fig. 2 is a schematic configuration view showing an example of a second exemplary embodiment of the fixing device according to the present exemplary embodiment;

Fig. 3 is a schematic configuration view showing an example of a third exemplary embodiment of the fixing device according to the present exemplary embodiment; and

Fig. 4 is a schematic configuration view showing an example of an image forming apparatus according to the present exemplary embodiment.

## DETAILED DESCRIPTION OF THE INVENTION

Hereinafter, the present exemplary embodiment as an example of the present invention will be described. The description and examples of these exemplary embodiments illustrate the exemplary embodiments and do not limit the scopes of the exemplary embodiments.

Regarding the ranges of numerical values described in stages in the present exemplary embodiment, the upper limit value or lower limit value described in one range of numerical values may be replaced with the upper limit value or lower limit value of another range of numerical values described in stages. In addition, regarding the ranges of numerical values described in the present exemplary embodiment, the upper limit value or lower limit value of a range of numerical

values may be replaced with values described in examples.

In the present exemplary embodiment, the term "step" includes not only an independent step but also a step that cannot be clearly distinguished from other steps but can achieve the expected object thereof.

In the present exemplary embodiment, in a case where an exemplary embodiment is described with reference to drawings, the configuration of the exemplary embodiment is not limited to the configuration shown in the drawings. In addition, the sizes of members in each drawing are conceptual, and a relative relationship between the sizes of the members is not limited thereto.

In the present exemplary embodiment, each component may include two or more kinds of corresponding substances. In a case where the amount of each component in a composition is mentioned in the present exemplary embodiment, and there are two or more kinds of substances corresponding to each component in the composition, unless otherwise specified, the amount of each component means the total amount of two or more kinds of the substances present in the composition.

[Film]

The film according to the present exemplary embodiment containing a resin, and particles of a siloxane compound having a structure represented by Formula: $[RSiO_{1.5}]_n$ (in the formula, R represents an organic group and n represents an integer of 2 or more), where at least one R in the formula is a group including an alkyl group, in which in a spatial distribution of the particles present in an evaluation region of 63 μm × 42 μm, an integrated value of a statistical quantity L(r) represented by Equation (1) in an interparticle distance r of 0.05 μm or more and 5.00 μm or less is 0 or more and 1.6 or less.

$$L(r) := \sqrt{K(r)/\pi} - r \qquad (1)$$

In Equation (1), r represents the interparticle distance, and K(r) represents a Ripley's K function K(r) represented by Equation (2).

$$K(r) := \frac{\sum_{i \neq j}^{N} 1(|X_i - X_j| \leq r)/s(|X_i - X_j|)}{\lambda^2} \qquad (2)$$

In Equation (2), $1(|X_i - X_j| \leq r)$ represents an indicator function, $X_i$ and $X_j$ represent coordinates of points i and j respectively, $|X_i - X_j|$ represents a Euclidean distance between the coordinates $X_i$ and $X_j$, r represents the interparticle distance, $s(|X_i - X_j|)$ represents an edge correction factor s(x) of an evaluation region represented by Equation (3), x equals $|X_i - X_j|$, N represents a total number of particles in the evaluation region, and λ represents a number density of particles in the evaluation region.

$$s(x) := L_x L_y - \tfrac{x}{\pi}(2L_x + 2L_y - x) \qquad (3)$$

In Equation (3), $L_x$ and $L_y$ represent lengths (μm) of sides of the evaluation region in an x-axis direction and a y-axis direction respectively, and $x = |X_i - X_j|$ is satisfied, where the $X_i$ and the $X_j$ represent coordinates of points i and j respectively, and the $|X_i - X_j|$ represents a Euclidean distance between the coordinates $X_i$ and $X_j$.

Hereinafter, the siloxane compound having a structure represented by the Formula: $[RSiO_{1.5}]_n$ (in the formula, R represents an organic group) is also referred to as "siloxane compound SQ", and particles of such siloxane compound are also referred to as "particles of siloxane compound SQ".

In addition, the "integrated value of the statistical quantity L(r) represented by Equation (1) at the interparticle distance r of 0.05 μm or more and 5.00 μm or less in the spatial distribution of the particles present in the evaluation region of 63 μm × 42 μm" is also referred to as the "integrated value of the statistical quantity L(r)".

[Integrated value of statistical quantity L(r)]

In the film according to the present exemplary embodiment, the fact that the integrated value of the statistical quantity L(r) is 0 or more and 1.6 or less means that the particles of the siloxane compound SQ in the film are dispersed in a state that is fine (dense) and substantially uniform.
In the film according to the present exemplary embodiment, from the viewpoint of further imparting high oil repellency to the film, for example, the integrated value of the statistical quantity L(r) is preferably 0 or more and 1.4 or less and more preferably 0 or more and 1.2 or less.
Here, the integrated value of the statistical quantity L (r) of the particles of the siloxane compound SQ is obtained as follows.
First, the spatial distribution of the particles of the siloxane compound SQ is obtained by observing an evaluation region of 63 μm × 42 μm on one surface of the film with a scanning electron microscope (for example, manufactured by Hitachi High-Tech Corporation, model number: SU8010) at a magnification of 20,000 times, and binarizing the obtained 256-tone image using analysis software (for example, free software "ImageJ") as necessary at a threshold value of 128.
The statistical quantity L(r) value at the interparticle distance r of 0.05 μm or more and 5.00 μm or less is calculated for each 0.05 μm based on Equation (1) to obtain the integrated value in the range of 0.05 μm or more and 5.00 μm or less, and the value is defined as the "integrated value of the statistical quantity L(r)".
Examples of methods for confirming that the particles in the image are particles of the siloxane compound SQ include specifying the particles with a scanning electron microscope and performing elemental analysis on the specified particle portion.
The film according to the present exemplary embodiment has the above-described configuration and is a film in which the surface exhibits high oil repellency even in a high temperature environment. The reason is presumed as follows.
For example, a film containing a siloxane compound such as long-chain dimethylpolysiloxane has high oil repellency and also has excellent strength stability.
On the other hand, the oil repellency of the film containing a siloxane compound may be reduced in case of being exposed to high heat, where molecular movement is intensified. It is considered that this is because, depending on the type (structure) of the siloxane compound, the main chain of the siloxane compound rotates, and the alkyl group that exhibits oil repellency moves and penetrate into the resin.
The film according to the present exemplary embodiment contains, together with the resin, particles of a siloxane compound SQ having a structure represented by Formula: $[RSiO_{1.5}]_n$ (in the formula, R represents an organic group and n represents an integer of 2 or more), where at least one R in the formula is a group including an alkyl group. The particles of such siloxane compound SQ are particles of a compound with high skeletal strength and a multi-dimensional structure. Therefore, it is presumed that the particles of the siloxane compound SQ have high heat resistance, and in a high temperature environment, the molecular movement is suppressed, making it difficult for the alkyl group that exhibits oil repellency to move and penetrate into the resin.
As a result, the film according to the present exemplary embodiment has the above-described configuration and thus is a film in which the surface exhibits high oil repellency even in a high temperature environment.
In addition, in the film according to the present exemplary embodiment, as shown by the integrated value of the statistical quantity L(r) described above, the particles of the siloxane compound SQ are dispersed in a state that is fine (dense) and substantially uniform. In a case where the uniform dispersion state of the particles of the siloxane compound SQ in the coating liquid is formed by a step of dispersing the particles in the coating liquid by a high-pressure collision-type disperser, which will be described later, to obtain the coating liquid, change of the abundance of the particles of the siloxane compound SQ in the film according to the present exemplary embodiment is said to be small in the thickness direction. As a result, it is presumed that, for example, even in a case where the surface of the film is abraded, the high oil repellency is maintained.
Hereinafter, the film according to the present exemplary embodiment will be described in detail.
The film according to the present exemplary embodiment contains a resin and particles of a siloxane compound SQ.
More specifically, in the film according to the present exemplary embodiment, the particles of the siloxane compound SQ are dispersed in the resin, and the dispersion state of the particles of the siloxane compound SQ satisfies the range of the integrated value of the statistical quantity L(r) described above.
Hereinafter, the components contained in the film according to the present exemplary embodiment will be described.

[Siloxane compound SQ, and particles thereof]

(Siloxane compound SQ)

The siloxane compound SQ has a structure represented by Formula: $[RSiO_{1.5}]_n$ (in the formula, R represents an organic group, and n represents an integer of 2 or more),where at least one R in the formula is a group including an alkyl group.

Examples of the organic group represented by R in the formula include a hydroxyl group, a siloxy group, a hydrocarbon group, a hydrocarbon group in which one or more methylene groups are replaced with a carbonyl group, a hydrocarbon group in which one or more carbon atoms are replaced with a heteroatom (an oxygen atom, a nitrogen atom, or a sulfur atom), and a group formed by a combination of these groups, but at least one R in the formula is a group including an alkyl group.

Examples of the siloxy group described as the organic group represented by R include a monoalkylsiloxy group, a dialkylsiloxy group, a trialkylsiloxy group, and the like, and for examples, a dialkylsiloxy group or a trialkylsiloxy group is preferable and a trialkylsiloxy group is more preferable.

Examples of the hydrocarbon group described as the organic group represented by R include an aliphatic hydrocarbon group and an aromatic hydrocarbon group.

Examples of the aliphatic hydrocarbon group include a linear, branched, or alicyclic saturated aliphatic hydrocarbon group, and a linear, branched, or alicyclic unsaturated aliphatic hydrocarbon group.

The aliphatic hydrocarbon group is, for example, preferably a hydrocarbon group having 1 or more and 20 or less carbon atoms, and more preferably a hydrocarbon group having 1 or more and 15 or less carbon atoms.

The aliphatic hydrocarbon group may be substituted with a substituent such as a halogen atom, a hydroxyl group, an amino group, and an aryl group.

Examples of the aromatic hydrocarbon group include a hydrocarbon group having 6 or more and 18 or less carbon atoms (for example, preferably 6 or more and 14 or less carbon atoms). Examples of the aromatic hydrocarbon group include a phenyl group, a naphthyl group, an anthracenyl group, and the like.

The aromatic hydrocarbon group may be substituted with a substituent such as a halogen atom, a hydroxyl group, an amino group, an alkyl group, and an alkoxy group.

The organic group represented by R may have a reactive group.

Examples of the reactive group include a vinyl group, an allyl group, a styryl group, a maleimide group, an epoxy group, a (meth)acryloyl group, and the like.

In the formula, a plurality of R's may be the same or different from each other.

From the viewpoint of expressing high oil repellency, at least one of a plurality of R's in the formula is a group having an alkyl group. Here, from the viewpoint of expressing high oil repellency, the group containing an alkyl group is, for example, an alkyl group itself or a siloxy group containing an alkyl group. That is, at least one of the plurality of R's present in the formula is, for example, preferably an alkyl group or a siloxy group containing an alkyl group. Here, such alkyl group is, for example, preferably an alkyl group having 1 or more to 6 or less carbon atoms, more preferably an alkyl group having 1 or more to 4 or less carbon atoms, and still more preferably an alkyl group having 1 carbon atom (that is, a methyl group).

n in the formula represents an integer of 2 or more, and from the viewpoint of expressing high oil repellency, for example, n preferably represents an integer of 8 or more and more preferably represents an integer of 8 or more and 10,000 or less.

The siloxane compound SQ is a polymer compound called silsesquioxane, which has various skeletal structures.

The siloxane compound SQ may have, as a skeletal structure, any of a cage-type structure (a perfect cage-type structure or a cage-type structure), a ladder-type structure, or a random structure.

(Particle diameter of particles of siloxane compound SQ)

In the film according to the present exemplary embodiment, the siloxane compound SQ is contained as particles.

From the viewpoint of improving the oil repellency at a high temperature, the average particle diameter of the particles of the siloxane compound SQ is, for example, preferably 0.05 μm or more and 3.0 μm or less, more preferably 0.05 μm or more and 1.5 μm or less, and still more preferably 0.05 μm or more and 1.0 μm or less.

Here, the average particle diameter of the particles of the siloxane compound SQ in the film is calculated by binarizing the spherical portion and the non-spherical portion (resin and amorphous particle portion) of the SEM image of the film surface obtained in a case of determining the integrated value of the statistical quantity L(r), as necessary, using analysis software (for example, free software "ImageJ") and measuring the diameter of the spherical portion.

I this case, it is also possible to confirm that the particles in the image are the particles of the siloxane compound SQ by the same method as in the case of obtaining the integrated value of the statistical quantity L(r) described above.

(Content of siloxane compound SQ)

From the viewpoint of improving the oil repellency at a high temperature, the content of the particles of the siloxane compound SQ is, for example, preferably 1% by mass or more and 50% by mass or less, more preferably 1% by mass or more and 20% by mass or less, and still more preferably 1% by mass or more and 10% by mass or less with respect to the mass of the resin.

[Resin]

Examples of the resin include a polyimide resin (PI resin), a polyamide-imide resin (PAI resin), a polyether ketone resin (for example, an aromatic polyether ether ketone resin or the like), a polyphenylene sulfide resin (PPS resin), a polyetherimide resin (PEI resin), a polyester resin, a polystyrene resin, a polyamide resin, a polycarbonate resin, a silicone resin, and the like.

In addition, the resin may be selected, for example, according to the use of the film.

For example, in a case where the film is used in a single-layer intermediate transfer belt, as the resin, an imide-based resin (that is, a resin containing a constitutional unit having an imide bond, for example, preferably a polyimide resin), a polyether ether ketone (PEEK) resin, or the like is preferable.

For example, in a case where the film is used in an outermost layer of a fixing belt, as the resin, an imide-based resin (that is, a resin containing a constitutional unit having an imide bond, for example, preferably a polyimide resin), a polyether ether ketone (PEEK) resin, or the like is preferable.

The film according to the present exemplary embodiment preferably does not include, for example, a fluorine atom. Specifically, for example, as the resin, a resin not containing a fluorine atom (specifically, a resin other than the fluororesin) is preferably applied.

Here, as a representative binder resin, the polyimide resin will be described.

Examples of the polyimide resin include an imidization product of polyamic acid (polyimide resin precursor) which is a polymer of a tetracarboxylic dianhydride and a diamine compound.

Examples of the polyimide resin include a resin having a constitutional unit represented by General Formula (I).

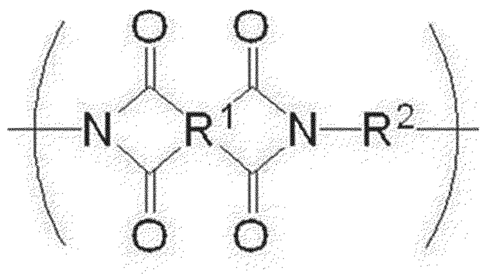

General Formula (I)

In General Formula (I), $R^1$ represents a tetravalent organic group, and $R^2$ represents a divalent organic group.

Examples of the tetravalent organic group represented by $R^1$ include an aromatic group, an aliphatic group, a cyclic aliphatic group, a group obtained by combining an aromatic group and an aliphatic group, and a group obtained by the substitution of these groups. Specific examples of the tetravalent organic group include a residue of a tetracarboxylic dianhydride which will be described later.

Examples of the divalent organic group represented by $R^2$ include an aromatic group, an aliphatic group, a cyclic aliphatic group, a group obtained by combining an aromatic group and an aliphatic group, and a group obtained by the substitution of these groups. Specific examples of the divalent organic group include a residue of a diamine compound which will be described later.

Specifically, examples of the tetracarboxylic dianhydride used as a raw material of the polyimide resin include a pyromellitic dianhydride, a 3,3',4,4'-benzophenone tetracarboxylic dianhydride, a 3,3',4,4'-biphenyltetracarboxylic dianhydride, a 2,3,3',4-biphenyltetracarboxylic dianhydride, a 2,3,6,7-naphthalenetetracarboxylic dianhydride, a 1,2,5,6-naphthalenetetracarboxylic dianhydride, a 1,4,5,8-naphthalenetetracarboxylic dianhydride, a 2,2'-bis(3,4-dicarboxyphenyl)sulfonic dianhydride, a perylene-3,4,9,10-Tetracarboxylic dianhydride, a bis(3,4-dicarboxyphenyl)ether dianhydride, and an ethylenetetracarboxylic dianhydride.

Specific examples of the diamine compound used as a raw material of the polyimide resin include 4,4'-diaminodiphenyl ether, 4,4'-diaminodiphenylmethane, 3,3'-diaminodiphenylmethane, 3,3'-dichlorobenzidine, 4,4'-diaminodiphenylsulfide, 3,3'-diaminodiphenylsulfone, 1,5-diaminonaphthalene, m-phenylenediamine, p-phenylenediamine, 3,3'-dimethyl 4,4'-biphenyldiamine, benzidine, 3,3'-dimethylbenzidine, 3,3'-dimethoxybenzidine, 4,4'-diaminodiphenylsulfone, 4,4'-diaminodiphenylpropane, 2,4-bis(β-amino tert-butyl)toluene, bis(p-β-amino-tert-butylphenyl)ether, bis(p-β-methyl-δ-aminophenyl)benzene, bis-p-(1,1-dimethyl-5-amino-pentyl) benzene, 1-isopropyl-2,4-m-phenylenediamine, m-xylylene diamine, p-xylylene diamine, di(p-aminocyclohexyl)methane, hexamethylenediamine, heptamethylenediamine, octamethylenediamine, nonamethylenediamine, decamethylenediamine, diaminopropyltetradiamine, 3-methylheptamethylenediamine, 4,4-dimethylheptamethylenediamine, 2,11-diaminododecane, 1,2-bis-3-aminopropoxyethane, 2,2-dimethylpropylenediamine, 3-methoxyhexamethylenediamine, 2,5-dimethylheptamethylenediamine, 5-methylnonamethylenediamine, 2,17-diaminoeicosadecane, 1,4-diaminocyclohexane, 1,10-diamino-1,10-dimethyldecane, 12-diaminooctadecane, 2,2-bis[4-(4-aminophenoxy)phenyl]propane, piperazine, $H_2N(CH_2)_3O(CH_2)_2O(CH_2)NH_2$, $H_2N(CH_2)_3S(CH_2)_3NH_2$, $H_2N(CH_2)_3N(CH_3)_2(CH_2)_3NH_2$, and the like.

The content of the resin is preferably set to be, for example, an amount that constitutes the main component of the film.

Specifically, the content of the resin is, for example, preferably 73% by mass or more and 90% by mass or less, and more preferably 78% by mass or more and 85% by mass or less with respect to the total mass of the film.

(Other additives)

Examples of other additives include known additives such as a conducting agent, a reinforcing agent, an antioxidant, a surfactant, and a heat-resistant antioxidant, depending on the use of the film.

As a representative additive, a conducting agent will be described.

The conducting agent is, for example, preferably conductive particles, and examples thereof include carbon black, a metal (for example, aluminum, nickel, or the like), a metal oxide (for example, yttrium oxide, tin oxide, or the like), an ion conducting substance (for example, potassium titanate, LiCl, or the like); and the like, and preferred examples thereof include carbon black.

Each of these conducting agents may be used alone, or two or more of these conducting agents may be used in combination.

Examples of the carbon black include Ketjen black, oil furnace black, channel black (that is, gas black), acetylene black, and the like. As the carbon black, carbon black having undergone a surface treatment (hereinafter, also called "surface-treated carbon black") may be used.

The surface-treated carbon black is obtained by adding, for example, a carboxy group, a quinone group, a lactone group, a hydroxy group, or the like to the surface of carbon black. Examples of the surface treatment method include an air oxidation method of reacting carbon black by bringing the carbon black into contact with air in a high temperature atmosphere, a method of reacting carbon black with nitrogen oxide or ozone at room temperature (for example, 22°C), and a method of oxidizing carbon black with air in a high temperature atmosphere and then with ozone at a low temperature.

Among these, for example, the conducting agent may be channel black, and particularly, may be acidic carbon black having a pH of 5.0 or less.

Examples of the acidic carbon black include carbon black whose surface is oxidatively treated, such as carbon black obtained by imparting a carboxyl group, a quinone group, a lactone group, a hydroxyl group, or the like to the surface.

From the viewpoint of improving transferability to embossed paper, the acidic carbon black is, for example, preferably carbon black having a pH of 4.5 or less, more preferably acidic carbon black having a pH of 4.0 or less, even more preferably acidic carbon black having a pH of 3.0 or less, particularly preferably acidic carbon black having a pH of 2.0 or more and 3.0 or less, and extremely preferably acidic carbon black having a pH of 2.0 or more and 2.8 or less.

The pH of the acidic carbon black is a value measured by a pH measuring method specified in JIS Z8802 (2011).

A content of the conducting agent in the film may be determined according to the application of the film. Examples of the content of the conducting agent in the film include 10% by mass or more and 50% by mass or less with respect to the total mass of the film, and the content of the conducting agent may be 12% by mass or more and 40% by mass or less, 14% by mass or more and 30% by mass or less, or 15% by mass or more and 20% by mass or less with respect to the total mass of the film.

In the film according to the present exemplary embodiment, the peel strength of the surface at 140°C is, for example, preferably 24 kPa or less, more preferably 22 kPa or less, and still more preferably 21 kPa or less.

Examples of the lower limit value of the peel strength of the surface at 140°C include 19.7 kPa.

The peel strength of the surface of the film at 140°C is an indicator of high oil repellency of the surface in a high temperature environment. Therefore, since the peel strength of the surface of the film according to the present exemplary embodiment at 140°C is in the above-described range, it can be said that the film may have a surface which exhibits high oil repellency even in a high temperature environment.

Here, the peel strength of the surface of the film at 200°C is measured as follows.

First, as a preparation in advance, P paper (manufactured by FUJIFILM Business Innovation Corp.) having an A4 size is prepared, and using a copy machine (ApeosPort-V C3375) manufactured by FUJIFILM Business Innovation Corp., a test paper on which a black 100% image is output on the entire surface is prepared. In addition, a square sample piece of 1

cm × 1 cm is taken from the film to be measured.

Next, the surface of the sample piece is attached to a probe of a tack tester (TA-500, manufactured by UBM) heated to 140°C, the probe is approached to the test paper at a rate of 0.1 mm/s, the sample piece is pressed against the image surface of the test paper, and then held for 10 s under a pressing load of 3,900 gf, and the peel strength is measured in a case of being pulled up at a pulling-up rate of 10 mm/s.

[Method for manufacturing film]

The film according to the present exemplary embodiment can be manufactured, for example, by the following method.

An example of the method for manufacturing the film according to the present exemplary embodiment includes a first step of dispersing a solution containing a resin or a resin precursor and particles of a siloxane compound SQ by a high-pressure collision-type disperser to obtain a coating liquid, a second step of applying the coating liquid onto a material to be coated to form a coating film, a third step of drying the coating film formed on the material to be coated, a fourth step of heating the dried coating film to form a resin film, and a fifth step of peeling off the resin film formed on the material to be coated.

The fourth process may be omitted depending on the type of resin. In addition, depending on the application of the film, the fifth step may be omitted in a case where it is not necessary to peel off the resin film from the material to be coated.

(First step)

The first step is a step of dispersing a solution containing a resin or a resin precursor and particles of the siloxane compound SQ by a high-pressure collision-type disperser to obtain a coating liquid.

By dispersing the solution containing the resin or the resin precursor and the particles of the siloxane compound SQ by a high-pressure collision-type disperser to obtain a coating liquid, the particles of the siloxane compound SQ are dispersed in the coating liquid in a state that is substantially uniform.

In the case of obtaining the film containing the conductive particles, for example, in the first step, it is preferable to disperse a solution containing the resin or the resin precursor, the particles of the siloxane compound SQ, and the conductive particles by a high-pressure collision-type disperser to obtain a coating liquid.

Here, the value of the pressure applied to the solution by the high-pressure collision-type disperser is a set value of the high-pressure collision-type disperser.

In addition, as a dispersion condition by the high-pressure collision type dispersing machine, for example, it is preferable to disperse at a dispersion pressure of 100 MPa or more and 220 MPa or less.

As the resin precursor used in the solution (or coating liquid), for example, in a case where the resin contained in the film is a polyimide resin, polyamic acid is applicable.

In addition, the solvent contained in the solution (or coating liquid) is preferably, for example, an organic solvent. The type of resin or organic solvent is not particularly limited.

-High-pressure collision-type disperser-

The high-pressure collision-type disperser is a device that performs dispersion by colliding pressurized raw materials with each other.

Examples of the high-pressure collision-type disperser include Genus PY manufactured by Genus Co., Ltd., Nanomizer manufactured by Nanomizer Inc., and the like.

(Second step)

The second step is a step of applying a coating liquid onto the material to be coated to form a coating film.

The material to be coated may be determined according to the application of the obtained film. For example, in the case of obtaining a cylindrical film, a cylindrical or columnar material to be coated may be used.

The material to be coated is not particularly limited, and for example, a metallic material is suitably used.

In addition, a glass coating, a ceramic coating, or the like may be provided on the surface of the material to be coated, or a silicone-based release agent, fluorine-based release agent, or the like may be applied.

Before applying the coating liquid, an operation of defoaming the coating liquid may be performed. By defoaming the coating liquid, the bubble inclusion during coating and the occurrence of coating film defects during application are suppressed. Examples of a method for defoaming the coating liquid include a method of performing defoaming in a reduced pressure state and a method of performing centrifugal separation, but defoaming in a reduced pressure state is appropriate because the method is simple and has a high defoaming ability.

A method of applying the coating liquid onto the material to be coated is not particularly limited, and a known coating method can be applied.
Examples of the coating method include bar coating, flow coating, and the like.
In addition, examples of the coating method include a method (spiral coating method) of applying the coating liquid in a spiral shape to an outer peripheral surface of the cylindrical or columnar material to be coated by jetting the coating liquid from a nozzle while moving the cylindrical or columnar material to be coated in the direction of the rotating axis, a method (blade coating method) of moving a blade while pressing the blade against the coating liquid discharged onto the surface of the cylindrical or columnar material to be coated in the direction of the rotating axis in the spiral coating method, and an immersion coating method of immersing the cylindrical or columnar material to be coated in the coating liquid and pulling up the material to be coated.

(Third step)

The third step is a step of drying the coating film formed on the substrate.
The drying of the coating film may be performed, for example, by heating the material to be coated while rotating the material to be coated to volatilize the solvent. In addition, for example, it is preferable to dry the coating film until the coating liquid does not drip even in a case where the material to be coated is not rotated.
The heating temperature of the coating film in the third step is, for example, more preferably 105°C or more and 170°C or less, and still more preferably 110°C or more and 135°C or less.
The drying time of the coating film in the third step is, for example, more preferably 10 minutes or more and 90 minutes or less, and still more preferably 30 minutes or more and 70 minutes or less.

(Fourth step)

The fourth step is a process of heating the dried coating film to form a resin film.
In the fourth step, for example, it is preferable to heat the coating film at a temperature higher than the heating temperature of the coating film in the third step. As a result, the volatilization of the solvent contained in the coating film is promoted. In addition, the reaction of the resin precursor is likely to proceed (for example, in a case where polyamic acid is used as the resin precursor, an imidization reaction is likely to proceed, and a polyimide resin is likely to be formed).
As the heating conditions in the fourth step, for example, it is preferable to heat at 150°C or more and 450°C or less (for example, preferably 200°C or more and 350°C or less) for 20 minutes or more and 180 minutes or less.
In the case of heating the coating film, for example, it is preferable to heat the coating film by gradually increasing the temperature in a stepwise manner or at a constant rate before reaching the final temperature of the heating.
Here, in a case where polyamic acid is used as the resin precursor, for example, the heating temperature varies depending on the type of raw material used, and from the viewpoint of mechanical characteristics and electrical characteristics, it is preferable to set the heating temperature to a temperature at which imidization is completed.

(Fifth step)

The fifth step is a step of peeling off the resin film formed on the material to be coated from the material to be coated.
A method of peeling off the resin film from the material to be coated is not particularly limited, and a known method is applied.
Examples of methods for peeling off the resin film from the material to be coated include a method of manually pulling out the material to be coated and a method of blowing air between the material to be coated and the resin film and then pulling out the material to be coated.
As described above, depending on the application of the film, the fifth step may be omitted in a case where it is not necessary to peel off the resin film from the material to be coated.
A film is obtained through the above processes.
After the fifth step, a step of cutting the resin film peeled off from the substrate into an optional size may be provided (cutting step).

<Member and transfer member>

The member according to the present exemplary embodiment has the film according to the present exemplary embodiment as a layer (also referred to as the outermost layer) constituting an outer surface.
The member according to the present exemplary embodiment can be used as a member for an electrophotographic image forming apparatus.

The transfer member according to the present exemplary embodiment has a film further containing conductive particles among the films according to the present exemplary embodiment, as a layer (also referred to as the outermost layer) constituting the outer surface. That is, in the transfer member according to the present exemplary embodiment, the layer constituting the outer surface contains conductive particles in addition to the resin and the particles of the siloxane compound SQ.

The "outer surface" refers to a surface that can be visually recognized from the outside of the member.

The member or the transfer member according to the present exemplary embodiment may be either a single layer member of the film according to the present exemplary embodiment or a member including a substrate and the film according to the present exemplary embodiment provided on the substrate.

The particles of the siloxane compound SQ used in the present exemplary embodiment have characteristics such as high hardness, low friction, and high mold releasability. The member or the transfer member according to the present exemplary embodiment has the film according to the present exemplary embodiment as a layer constituting an outer surface of the film, in which the particles of the siloxane compound SQ having such characteristics are dispersed in a state that is fine (dense) and substantially uniform as shown by the integrated value of the statistical quantity L(r). From this, it is presumed that the member or the transfer member according to the present exemplary embodiment has the effects of the following (1) to (3).

(1) The adhesion of foreign matter to the outer surface of the member is suppressed.
(2) The particles of the siloxane compound SQ are exposed (protrude) on the outer surface of the member and are brought into point contact with other members (contact objects), thereby increasing the abrasion resistance.
(3) The rigidity of the layer constituting the outer surface of the member is increased, and the mechanical strength (for example, the breaking strength) is increased.

In a case where the member or the transfer member according to the present exemplary embodiment is applied to an intermediate transfer body for electrophotographic image forming apparatus, in the member or the transfer member, a single-layer body of the film according to the present exemplary embodiment, or a laminate having the film as the outermost layer can be applied. In the laminate, as a layer other than the film (for example, a substrate layer on which the film is to be provided, an elastic layer provided between the film and the substrate layer, or the like), a known layer provided on an intermediate transfer body can be used.

The intermediate transfer body to which the member according to the present exemplary embodiment is applied is less likely to cause toner, paper dust, discharge products, or the like to adhere to an outer surface (also referred to as an outer peripheral surface), and has excellent abrasion resistance, thereby transferability, cleaning performance, and cleaning durability are excellent. As a result, the image forming apparatus including the intermediate transfer body to which the member according to the present exemplary embodiment is applied can suppress the decrease in image quality and has excellent image quality maintainability.

In a case where the member according to the present exemplary embodiment is used in a fixing member (such as a heating member, a pressure member, or a sliding member) for an electrophotographic image forming apparatus, as the member, a member having a substrate, an elastic layer provided on the substrate, and a release layer that is provided on the elastic layer and constituted of the film according to the present exemplary embodiment can be applied. As the substrate and the elastic layer, known substrate and elastic layers to be provide as a fixing member can be applied. In addition, the fixing member may have a known metal heating layer for electromagnetic induction heating, between the substrate and the elastic layer.

Examples of the member according to the present exemplary embodiment include a paper transport member for an electrophotographic image forming apparatus and the like, in addition to the intermediate transfer body and the fixing member.

<Transfer device>

The transfer device according to the present exemplary embodiment includes an intermediate transfer body that is constituted of the member or the transfer member according to the present exemplary embodiment and has an outer peripheral surface to which a toner image is transferred, a primary transfer device in which a toner image formed on a surface of an image holder is primarily transferred to a surface of the intermediate transfer body, and a secondary transfer device in which the toner image transferred to the surface of the intermediate transfer body is secondarily transferred to a surface of a recording medium.

Here, the member or the transfer member according to the present exemplary embodiment, which is applied to the intermediate transfer body, for example, preferably has a layer that constitutes an outer peripheral surface (outer surface) in which a predetermined amount of conductive particles is blended, in addition to the resin and the siloxane compound SQ particles. For example, a content of the conductive particles with respect to the total mass of the layer

constituting the outer peripheral surface is preferably 5% by mass or more and 40% by mass or less, more preferably 10% by mass or more and 35% by mass or less, and still more preferably 15% by mass or more and 30% by mass or less.

(Primary transfer device)

In the primary transfer device, the primary transfer member is arranged to face the image holder across the intermediate transfer body (for example, intermediate transfer belt). In the primary transfer device, by the primary transfer member, a voltage with polarity opposite to charging polarity of a toner is applied to the intermediate transfer body, such that primary transfer of a toner image to the outer peripheral surface of the intermediate transfer body is performed.

(Secondary transfer device)

In the secondary transfer device, the secondary transfer member is arranged on a toner image-holding side of the intermediate transfer body. The secondary transfer device includes, for example, a secondary transfer member and a back surface member that is arranged on the side opposite to the toner image-holding side of the intermediate transfer body. In the secondary transfer device, the intermediate transfer body and the recording medium are interposed between the secondary transfer member and the back surface member, and a transfer electric field is formed. In this way, secondary transfer of the toner image formed on the intermediate transfer body to the recording medium is performed.

The secondary transfer member may be a secondary transfer roll or a secondary transfer belt. As the back surface member, for example, a back roll is used.

The transfer device according to the present exemplary embodiment may be a transfer device that transfers a toner image to the surface of a recording medium via a plurality of intermediate transfer bodies. That is, the transfer device may be, for example, a transfer device in which a toner image is primarily transferred to a first intermediate transfer body from an image holder, the toner image is secondarily transferred to a second intermediate transfer body from the first intermediate transfer body, and then the toner image is tertiarily transferred to a recording medium from the second intermediate transfer body.

As at least one of the plurality of intermediate transfer bodies of the transfer device, the intermediate transfer body constituted of the member according to the present exemplary embodiment is used.

<Fixing member>

The fixing member according to the present exemplary embodiment includes a first rotary member and a second rotary member that is disposed to be in contact with an outer surface of the first rotary member, in which at least one of the first rotary member or the second rotary member is constituted of the member according to the present exemplary embodiment.

Hereinafter, regarding the fixing device according to the present exemplary embodiment, a fixing device including a heating roll and a pressure belt will be described as a first exemplary embodiment, a fixing device including a heating belt and a pressure roll will be described as a second exemplary embodiment, and an electromagnetic induction heating-type fixing device including a belt and a pressure roll will be described as a third exemplary embodiment.

The fixing device according to the present exemplary embodiment is not limited to the first to third exemplary embodiments, and may be a fixing device including a heating roll or a heating belt and a pressure belt.

Then, in the fixing device according to the present exemplary embodiment, the member according to the present exemplary embodiment may be applied to any of the heating roll, the heating belt, the pressure roll, or the pressure belt.

(First exemplary embodiment of fixing device)

The first exemplary embodiment of the fixing device will be described with reference to Fig. 1. Fig. 1 is a schematic view showing an example (that is, a fixing device 60) of a first exemplary embodiment of the fixing device.

As shown in Fig. 1, a fixing device 60 is configured, for example, with a heating roll 61 (an example of the first rotary member) that is driven to rotate, a pressure belt 62 (an example of the second rotary member), and a pressing pad 64 (an example of a pressing member) that presses the heating roll 61 via the pressure belt 62.

Regarding the pressing pad 64, for example, the pressure belt 62 and the heating roll 61 may be relatively pressed. Therefore, the pressure belt 62 may be pressed against the heating roll 61, or the heating roll 61 may be pressed against the pressure belt 62.

A halogen lamp 66 (an example of a heating device) is arranged on the inside of the heating roll 61. The heating device is not limited to the halogen lamp, and other heating members that generate heat may be used.

Meanwhile, for example, a thermosensitive element 69 is disposed in contact with a surface of the heating roll 61. The lighting of the halogen lamp 66 is controlled based on the temperature measurement value by the thermosensitive

element 69, and the surface temperature of the heating roll 61 is kept at a target set temperature (for example, 150°C).

The pressure belt 62 is rotatably supported by, for example, the pressing pad 64 disposed therein and a belt traveling guide 63. In a sandwiching region N (nip portion), the pressure belt is disposed to be pressed against the heating roll 61 by the pressing pad 64.

The pressing pad 64 is, for example, disposed in a state of being pressed against the heating roll 61 via the pressure belt 62 inside the pressure belt 62, and forms a sandwiching region N with the heating roll 61.

In the pressing pad 64, for example, a front sandwiching member 64a for securing a wide sandwiching region N is disposed on the inlet side of the sandwiching region N, and a peeling sandwiching member 64b for giving distortion to the heating roll 61 is disposed on the outlet side of the sandwiching region N.

In order to reduce sliding resistance between an inner peripheral surface of the pressure belt 62 and the pressing pad 64, for example, a sheet-like sliding member 68 is provided on a surface of the front sandwiching member 64a and the peeling sandwiching member 64b in contact with the pressure belt 62. The pressing pad 64 and the sliding member 68 are held by a metal holding member 65.

The sliding member 68 is provided, for example, so that a sliding surface thereof is in contact with the inner peripheral surface of the pressure belt 62, and is involved in holding and supplying an oil present between the sliding member 68 and the pressure belt 62.

For example, the belt traveling guide 63 is attached to the holding member 65, and the pressure belt 62 is configured to rotate.

The heating roll 61 rotates, for example, in the direction of the arrow S by a drive motor (not shown), and following the above rotation, the pressure belt 62 rotates in the direction of the arrow R opposite to the rotation direction of the heating roll 61. That is, for example, the heating roll 61 rotates clockwise in Fig. 1, while the pressure belt 62 rotates counterclockwise.

Then, paper K (an example of a recording medium) having an unfixed toner image is guided by, for example, a fixing inlet guide 56 and transported to the sandwiching region N. While the paper K is passing through the sandwiching region N, the unfixed toner image on the paper K is fixed by the pressure and heat acting on the sandwiching region N.

In the fixing device 60, for example, by the front sandwiching member 64a in the form of a recess conforming to the outer peripheral surface of the heating roll 61, a wider sandwiching region N is secured, compared to a configuration having no front sandwiching member 64a.

In addition, the fixing device 60 is configured, for example, with the peeling sandwiching member 64b that is arranged to protrude from the outer peripheral surface of the heating roll 61, such that the heating roll 61 is locally distorted much in the outlet region of the sandwiching region N.

In a case where the peeling sandwiching member 64b is disposed as above, for example, the paper K after fixing passes through the distortion formed locally large when passing through the peeling sandwiching region, and thus the paper K is easy to be peeled off from the heating roll 61.

As an auxiliary device for peeling, for example, a peeling member 70 is arranged on a downstream side of the sandwiching region N of the heating roll 61. The peeling member 70 is, for example, held by a holding member 72 in a state where a peeling claw 71 is close to the heating roll 61 in a direction facing the rotation direction of the heating roll 61 (counter direction).

(Second exemplary embodiment of fixing device)

The second exemplary embodiment of the fixing device will be described with reference to Fig. 2. Fig. 2 is a schematic view showing an example (that is, a fixing device 80) of a second exemplary embodiment of the fixing device.

As shown in Fig. 2, a fixing device 80 is configured, for example, with a fixing belt module 86 including a heating belt 84 (an example of the first rotary member) and a pressure roll 88 (an example of the second rotary member) arranged in a state of being pressed on a heating belt 84 (fixing belt module 86). For example, a sandwiching region N (nip portion) is formed in a contact portion between the heating belt 84 (fixing belt module 86) and the pressure roll 88. In the sandwiching region N, paper K (an example of a recording medium) is pressed and heated, and the toner image is fixed.

The fixing belt module 86 includes, for example, an endless heating belt 84, a heating and pressing roll 89 around which the heating belt 84 is wound on the side of the pressure roll 88 and which is driven to rotate by the rotational force of a motor (not shown in the drawing) and presses the heating belt 84 from an inner peripheral surface thereof toward the pressure roll 88, and a support roll 90 which supports the heating belt 84 from the inside at a position different from the heating and pressing roll 89.

The fixing belt module 86 is provided with, for example, a support roll 92 which is disposed outside the heating belt 84 and regulates the circulating path thereof, a posture correction roll 94 which corrects the posture of the heating belt 84 from the heating and pressing roll 89 to the support roll 90, and a support roll 98 which applies tension to the heating belt 84 from the inner peripheral surface on the downstream side of the sandwiching region N formed between the heating belt 84 and the pressure roll 88.

The fixing belt module 86 is provided, for example, so that a sheet-like sliding member 82 is interposed between the heating belt 84 and the heating and pressing roll 89.

The sliding member 82 is provided, for example, so that a sliding surface thereof is in contact with an inner peripheral surface of the heating belt 84, and is involved in holding and supplying an oil existing between the sliding member 82 and the heating belt 84.

Here, the sliding member 82 is provided, for example, in a state where both ends thereof are supported by a support member 96.

On the inside of the heating and pressing roll 89, for example, a halogen heater 89A (an example of a heating device) is provided.

The support roll 90 is, for example, a cylindrical roll formed of aluminum. A halogen heater 90A (an example of a heating device) is arranged on the inside of the support roll 90, such that the heating belt 84 is heated from the inner peripheral surface side.

At both ends of the support roll 90, for example, spring members (not shown) pressing the heating belt 84 outward are arranged.

The support roll 92 is, for example, a cylindrical roll formed of aluminum. A release layer consisting of a fluororesin having a thickness of 20 μm is formed on a surface of the support roll 92.

The release layer of the support roll 92 is formed, for example, to prevent a toner or paper dust from the outer peripheral surface of the heating belt 84 from accumulating on the support roll 92.

For example, a halogen heater 92A (an example of a heating device) is arranged on the inside of the support roll 92, such that the heating belt 84 is heated from the outer peripheral surface side.

That is, for example, the heating and pressing roll 89, the support roll 90, and the support roll 92 are configured to heat the heating belt 84.

The posture correction roll 94 is, for example, a columnar roll made of aluminum, and an end position measurement mechanism (not shown) for measuring the end position of the heating belt 84 is disposed in the vicinity of the posture correction roll 94.

In the posture correction roll 94, for example, an axial displacement mechanism (not shown) which displaces a contact position of the heating belt 84 in an axial direction according to the measurement result of the end position measurement mechanism is arranged, and the posture correction roll 94 is configured to control meandering of the heating belt 84.

The pressure roll 88 is provided, for example, such that the pressure roll 88 is rotatably supported and pressed on the site of the heating and pressing roll 89 around which the heating belt 84 is wound by a biasing device such as a spring not shown in the drawing. As a result, as the heating belt 84 (heating and pressing roll 89) of the fixing belt module 86 moves rotationally in the direction of the arrow S, the pressure roll 88 follows the heating belt 84 (heating and pressing roll 89) and moves rotationally in the direction of the arrow R.

The paper K having an unfixed toner image (not shown in the drawing) is transported in the direction of an arrow P and is guided to the sandwiching region N of the fixing device 80. While the paper K is passing through the sandwiching region N, the unfixed toner image on the paper K is fixed by the pressure and heat acting on the sandwiching region N.

For the fixing device 80, an embodiment has been described in which a halogen heater (halogen lamp) is used as an example of a plurality of heating devices. However, the fixing device is not limited thereto, and a radiation lamp heating element (a heating element generating radiation (such as infrared rays)) and a resistance heating element (a heating element generating Joule heat by passing an electric current through a resistor: for example, a heating element obtained by forming a film with a resistor on a ceramic substrate and baking the resultant) other than the halogen heater may be used.

(Third exemplary embodiment of fixing device)

The third exemplary embodiment of the fixing device will be described with reference to Fig. 3. Fig. 3 is a schematic view showing an example (that is, a fixing device 200) of a third exemplary embodiment of the fixing device.

As shown in Fig. 3, the fixing device 200 is an electromagnetic induction heating-type fixing device including a belt 220 having a metal layer.

In the fixing device 200, a pressure roll (pressure member) 211 is arranged such that pressure is applied to a part of the belt 220. From the viewpoint of efficiently performing fixing, a contact region (nip) is formed between the belt 220 and the pressure roll 211, and the belt 220 is curved to conform to the peripheral surface of the pressure roll 211. In addition, from the viewpoint of ensuring the peelability of a recording medium, a bent portion where the belt is bent is formed at the end of the contact region (nip).

The pressure roll 211 is configured with an elastic layer 211B made of silicone rubber or the like that is formed on the substrate 211A, and a release layer 211C formed of a fluorine-based compound that is formed on the elastic layer 211B.

On the inside of the belt 220, an opposing member 213 is disposed at a position facing the pressure roll 211. The

opposing member 213 consists of a metal, a heat-resistant resin, heat-resistant rubber, or the like, and has a pad 213B that is in contact with the inner peripheral surface of the belt 220 to locally increase pressure, and a support 213A that supports the pad 213B.

An electromagnetic induction heating device 212 having a built-in electromagnetic induction coil (excitation coil) 212a is provided at a position facing the pressure roll 211 (an example of a pressure member) across the belt 220. The electromagnetic induction heating device 212 applies an AC current to the electromagnetic induction coil, such that the generated magnetic field changes by an excitation circuit and an eddy current is generated in a metal layer (not shown in the drawing, for example, an electromagnetic induction metal layer) of the belt 220. The eddy current is converted into heat (Joule heat) by the electric resistance of a metal layer not shown in the drawing. As a result, the surface of the belt 220 generates heat.

The position of the electromagnetic induction heating device 212 is not limited to the position shown in Fig. 3. For example, the electromagnetic induction heating device 212 may be installed on the upstream side in the rotation direction B with respect to the contact region of the belt 220, or may be installed on the inside of the belt 220.

In the fixing device 200, by a driving device, a driving force is transmitted to the gear fixed to the end of the belt 220. As a result, the belt 220 performs self-rotation in the direction of the arrow B, and as the belt 220 rotates, the pressure roll 211 rotates in the opposite direction, that is, in the direction of the arrow C.

A recording medium 215 on which an unfixed toner image 214 is formed is passed through a contact region (nip) between the belt 220 and the pressure roll 211 in the fixing device 200 in the direction of the arrow A, and pressure is applied to the molten unfixed toner image 214. As a result, the unfixed toner image 214 is fixed to the recording medium 215.

<Image forming apparatus>

Next, the image forming apparatus according to the present exemplary embodiment will be described.

The image forming apparatus according to the present exemplary embodiment includes an image holder, a charging device that charges a surface of the image holder, an electrostatic latent image forming device that forms an electrostatic latent image on the charged surface of the image holder, a developing device that contains a developer containing a toner and develops the electrostatic latent image formed on the surface of the image holder with the developer to form a toner image, a transfer device that transfers the toner image to a surface of a recording medium, and the fixing device that fixes the toner image to the surface of the recording medium.

In the image forming apparatus according to the present exemplary embodiment, the fixing device according to the present exemplary embodiment is applied as a transfer device, or the fixing device according to the present exemplary embodiment is applied as a fixing device. In addition, in the image forming apparatus according to the present exemplary embodiment, the fixing device according to the present exemplary embodiment may be applied as a transfer device, and the fixing device according to the present exemplary embodiment may be applied as a fixing device.

In the image forming apparatus according to the present exemplary embodiment, each of the transfer device and the fixing device may be made into a cartridge such that the transfer device and the fixing device are detachable from an image forming apparatus. That is, the image forming apparatus according to the present exemplary embodiment may include the transfer device according to the present exemplary embodiment and the fixing device according to the present exemplary embodiment respectively, as a device configuring a process cartridge.

Hereinafter, the image forming apparatus according to the present exemplary embodiment will be described with reference to a drawing.

Fig. 4 is a schematic configuration view showing the configuration of the image forming apparatus according to the present exemplary embodiment.

As shown in Fig. 4, an image forming apparatus 100 according to the present exemplary embodiment is, for example, an intermediate transfer-type image forming apparatus that is generally called a tandem type, and includes a plurality of image forming units 1Y, 1M, 1C, and 1K in which a toner image of each color component is formed by an electrophotographic method, a primary transfer portion 10 that performs sequential transfer (primary transfer) of the toner image of each color component formed by each of the image forming units 1Y, 1M, 1C, and 1K to an intermediate transfer belt 15, a secondary transfer portion 20 that performs batch transfer (secondary transfer) of the overlapped toner images transferred to the intermediate transfer belt 15 to paper K as a recording medium, and a fixing device 60 that fixes the images transferred by the secondary transfer on the paper K. The image forming apparatus 100 also has a control unit 40 that controls the operation of each device (each portion).

Each of the image forming units 1Y, 1M, 1C, and 1K of the image forming apparatus 100 includes a photoreceptor 11 that rotates in the direction of an arrow A, as an example of an image holder that holds a toner image formed on the surface.

Around the photoreceptor 11, there are provided a charger 12 for charging the photoreceptor 11 as an example of a charging device and a laser exposure machine 13 for drawing an electrostatic latent image on the photoreceptor 11 as an example of an electrostatic latent image forming device (in Figure, the exposure beam is represented by a mark Bm).

Around the photoreceptor 11, as an example of a developing device, there are provided a developing machine 14 that contains toners of each color component and makes the electrostatic latent image on the photoreceptor 11 into a visible image by using the toners and a primary transfer roll 16 that transfers toner images of each color component formed on the photoreceptor 11 to the intermediate transfer belt 15 by the primary transfer portion 10.

Around the photoreceptor 11, there are provided a photoreceptor cleaner 17 that removes the residual toner on the photoreceptor 11 and devices for electrophotography, such as the charger 12, the laser exposure machine 13, the developing machine 14, the primary transfer roll 16, and the photoreceptor cleaner 17, that are arranged in sequence along the rotation direction of the photoreceptor 11. These image forming units 1Y, 1M, 1C, and 1K are substantially linearly disposed in order of yellow (Y), magenta (M), cyan (C), and black (K) from the upstream side of the intermediate transfer belt 15.

The intermediate transfer belt 15 which is an intermediate transfer body is configured with a film-shaped pressure belt including a base layer that is a resin such as polyimide or polyamide and containing an appropriate amount of an antistatic agent such as carbon black. Then, the intermediate transfer belt 15 is configured to have a volume resistivity of $10^6$ Ωcm or more and $10^{14}$ Ωcm or less and has a thickness of about, for example, 0.1 mm. Specifically, the intermediate transfer belt 15 may be an intermediate transfer body constituted of the above-described member according to the present exemplary embodiment. More specifically, the intermediate transfer belt 15 may be constituted of, for example, a belt including a layer which constitutes an outer peripheral surface and contains a resin such as polyimide or polyamide, particles of the siloxane compound SQ, and a conducting agent (also referred to as an antistatic agent) such as carbon black. In this case, the volume resistivity of the intermediate transfer belt 15 is also set to be $10^6$ Ωcm or more and $10^{14}$ Ωcm or less, and the thickness thereof is preferably set to be, for example, about 0.1 mm.

By various rolls, the intermediate transfer belt 15 is driven to circulate (rotate) in a direction B shown in Fig. 4 at a speed fit for the purpose. The image forming apparatus 100 has, as the various rolls, a driving roll 31 that is driven by a motor (not shown in the drawing) excellent in maintaining a constant speed and rotates the intermediate transfer belt 15, a support roll 32 that supports the intermediate transfer belt 15 substantially linearly extending along the arrangement direction of the photoreceptors 11, a tension applying roll 33 that applies tension to the intermediate transfer belt 15 and functions as a correcting roll preventing meandering of the intermediate transfer belt 15, a back roll 25 that is provided in the secondary transfer portion 20, and a cleaning back roll 34 that is provided in a cleaning portion scrapping off the residual toner on the intermediate transfer belt 15.

The primary transfer portion 10 is configured with the primary transfer roll 16 that is arranged to face the photoreceptor 11 across the intermediate transfer belt 15. The primary transfer roll 16 is configured with a core and a sponge layer as an elastic layer fixed around the core. The core is a cylindrical rod constituted of a metal such as iron or SUS. The sponge layer is a sponge-like cylindrical roll which is formed of blended rubber of NBR, SBR, and EPDM mixed with a conducting agent such as carbon black and has a volume resistivity of $10^{7.5}$ Ωcm or more and $10^{8.5}$ Ωcm or less.

Then, the primary transfer roll 16 is arranged to be pressed on the photoreceptor 11 with the intermediate transfer belt 15 interposed therebetween, and is configured such that a voltage (primary transfer bias) with an opposite polarity to a charging polarity (minus polarity and the same applies below) of the toner is applied to the primary transfer roll 16. As a result, the toner image on each photoreceptor 11 is sequentially electrostatically sucked onto the intermediate transfer belt 15, which leads to the formation of overlapped toner images on the intermediate transfer belt 15.

The secondary transfer portion 20 is configured to include the back roll 25 and a secondary transfer roll 22 that is arranged on a toner image-holding surface side of the intermediate transfer belt 15.

The surface of the back roll 25 is configured with a tube of blended rubber of EPDM and NBR in which carbon is dispersed, and the inside of the back roll 25 is configured with EPDM rubber. Then, the back roll 25 is formed such that the surface resistivity thereof is $10^7$ Ω/□ or more and $10^{10}$ Ω/□ or less. The hardness of the back roll 25 is set to, for example, 70° (ASKER C: manufactured by KOBUNSHI KEIKI CO., LTD., the same shall apply hereinafter). The back roll 25 is arranged on the back surface side of the intermediate transfer belt 15 to configure a counter electrode of the secondary transfer roll 22. A power supply roll 26 made of a metal to which secondary transfer bias is stably applied is arranged to come into contact with the back roll 25.

The secondary transfer roll 22 is configured with a core and a sponge layer as an elastic layer fixed around the core. The core is a cylindrical rod constituted of a metal such as iron or SUS. The sponge layer is a sponge-like cylindrical roll which is formed of blended rubber of NBR, SBR, and EPDM mixed with a conducting agent such as carbon black and has a volume resistivity of $10^{7.5}$ Ωcm or more and $10^{8.5}$ Ωcm or less.

The secondary transfer roll 22 is arranged to be pressed on the back roll 25 across the intermediate transfer belt 15. The secondary transfer roll 22 is grounded such that the secondary transfer bias is formed between the secondary transfer roll 22 and the back roll 25, which induces secondary transfer of the toner image onto the paper K transported to the secondary transfer portion 20.

On the downstream side of the secondary transfer portion 20 of the intermediate transfer belt 15, an intermediate transfer belt cleaner 35 separable from the intermediate transfer belt 15 is provided which removes the residual toner or paper powder on the intermediate transfer belt 15 remaining after the secondary transfer and cleans the surface of the

intermediate transfer belt 15.

The intermediate transfer belt 15, the primary transfer portion 10 (primary transfer roll 16), and the secondary transfer portion 20 (secondary transfer roll 22) correspond to an example of the transfer device.

On the other hand, on the upstream side of the yellow image forming unit 1Y, a reference sensor (home position sensor) 42 is arranged which generates a reference signal to be a reference for taking the image forming timing in each of the image forming units 1Y, 1M, 1C, and 1K. The reference sensor 42 recognizes a mark provided on the back side of the intermediate transfer belt 15 and generates a reference signal. Each of the image forming units 1Y, 1M, 1C, and 1K is configured such that these units start to form images according to the instruction from the control unit 40 based on the recognition of the reference signal.

On the downstream side of the black image forming unit 1K, an image density sensor 43 for adjusting image quality is arranged.

The image forming apparatus according to the present exemplary embodiment includes, as a transport device for transporting the paper K, a paper storage portion 50 that stores the paper K, a paper feeding roll 51 that takes out and transports the paper K stacked in the paper storage portion 50 at a predetermined timing, a transport roll 52 that transports the paper K transported by the paper feeding roll 51, a transport guide 53 that sends the paper K transported by the transport roll 52 to the secondary transfer portion 20, a transport belt 55 that transports the paper K transported after going through secondary transfer by the secondary transfer roll 22 to the fixing device 60, and a fixing inlet guide 56 that guides the paper K to the fixing device 60.

Next, the basic image forming process of the image forming apparatus according to the present exemplary embodiment will be described.

In the image forming apparatus according to the present exemplary embodiment, image data output from an image reading device not shown in the drawing, a personal computer (PC) not shown in the drawing, or the like is subjected to image processing by an image processing device not shown in the drawing, and then the image forming units 1Y, 1M, 1C, and 1K perform the image forming operation.

In the image processing device, image processing, such as shading correction, misregistration correction, brightness/color space conversion, gamma correction, or various image editing works such as frame erasing or color editing and movement editing, is performed on the input image data. The image data that has undergone the image processing is converted into color material gradation data of 4 colors, Y, M, C, and K, and is output to the laser exposure machine 13.

In the laser exposure machine 13, according to the input color material gradation data, for example, the photoreceptor 11 of each of the image forming units 1Y, 1M, 1C, and 1K is irradiated with the exposure beam Bm emitted from a semiconductor laser. The surface of each of the photoreceptors 11 of the image forming units 1Y, 1M, 1C, and 1K is charged by the charger 12 and then scanned and exposed by the laser exposure machine 13. In this way, an electrostatic latent image is formed. By each of the image forming units 1Y, 1M, 1C, and 1K, the formed electrostatic latent image is developed as a toner image of each of the colors Y, M, C, and K.

In the primary transfer portion 10 where each photoreceptor 11 and the intermediate transfer belt 15 come into contact with each other, the toner images formed on the photoreceptors 11 of the image forming units 1Y, 1M, 1C, and 1K are transferred onto the intermediate transfer belt 15. More specifically, in the primary transfer portion 10, by the primary transfer roll 16, a voltage (primary transfer bias) with a polarity opposite to the charging polarity (negative polarity) of the toner is applied to the substrate of the intermediate transfer belt 15, and the toner images are sequentially overlapped on the surface of the intermediate transfer belt 15 and subjected to primary transfer.

After the primary transfer by which the toner images are sequentially transferred to the surface of the intermediate transfer belt 15, the intermediate transfer belt 15 moves, and the toner images are transported to the secondary transfer portion 20. In a case where the toner images are transported to the secondary transfer portion 20, in the transport device, the paper feeding roll 51 rotates in accordance with the timing at which the toner images are transported to the secondary transfer portion 20, and the paper K having the target size is fed from the paper storage portion 50. The paper K fed from the paper feeding roll 51 is transported by the transport roll 52, passes through the transport guide 53, and reaches the secondary transfer portion 20. Before reaching the secondary transfer portion 20, the paper K is temporarily stopped, and a positioning roll (not shown in the drawing) rotates according to the movement timing of the intermediate transfer belt 15 holding the toner images, so that the position of the paper K is aligned with the position of the toner images.

In the secondary transfer portion 20, via the intermediate transfer belt 15, the secondary transfer roll 22 is pressed on the back roll 25. At this time, the paper K transported at the right timing is interposed between the intermediate transfer belt 15 and the secondary transfer roll 22. At this time, in a case where a voltage (secondary transfer bias) with the same polarity as the charging polarity (negative polarity) of the toner is applied from the power supply roll 26, a transfer electric field is formed between the secondary transfer roll 22 and the back roll 25. In the secondary transfer portion 20 pressed by the secondary transfer roll 22 and the back roll 25, the unfixed toner images held on the intermediate transfer belt 15 are electrostatically transferred onto the paper K in a batch.

Thereafter, the paper K to which the toner images are electrostatically transferred is transported in a state of being

peeled off from the intermediate transfer belt 15 by the secondary transfer roll 22, and is transported to the transport belt 55 provided on the downstream side of the secondary transfer roll 22 in the paper transport direction. The transport belt 55 transports the paper K to the fixing device 60 according to the optimum transport speed in the fixing device 60. The unfixed toner images on the paper K transported to the fixing device 60 are fixed on the paper K by being subjected to a fixing treatment by heat and pressure by the fixing device 60. Then, the paper K on which a fixed image is formed is transported to an ejected paper-storing portion (not shown in the drawing) provided in an output portion of the image forming apparatus.

Meanwhile, after the transfer to the paper K is finished, the residual toner remaining on the intermediate transfer belt 15 is transported to the cleaning portion as the intermediate transfer belt 15 rotates, and is removed from the intermediate transfer belt 15 by the back roll 34 for cleaning and an intermediate transfer belt cleaner 35.

Hitherto, the present exemplary embodiment has been described. However, the present exemplary embodiment is not limited to the above exemplary embodiments, and various modifications, changes, and ameliorations can be added thereto.

Examples

Hereinafter, the present invention will be more specifically described with reference to examples. However, the present invention is not limited to the following examples.

<Example 1>

(First step)

A solution is prepared in which particles of the siloxane compound SQ of the type shown in Table 1 is added to a polyamic acid of a polyimide varnish (manufactured by JFE Chemical Corporation, JIV300R, solid content fraction of 18% by mass). The prepared solution is dispersed by a high-pressure collision-type disperser at a dispersion pressure of 100 MPa or more to obtain a coating liquid.

However, the particles of the siloxane compound SQ are added in an amount such that an amount in the obtained film is the content of the particles of the siloxane compound SQ shown in Table 1 (content of the particles of the siloxane compound SQ with respect to the resin).

(Second step)

The coating liquid is applied onto a metal plate with a bar coater to a thickness of 100 μm to form a coating film on the metal plate.

(Third step)

While the metal plate on which the coating film has been formed is kept horizontal, the coating film is heated and dried at 140°C for 30 minutes.

(Fourth step)

The dried coating film is heated such that a maximum temperature is 320°C for 120 minutes to form a resin film, thereby obtaining a film.

<Examples 2 to 8 and Comparative Example 1>

A film is obtained in the same manner as in Example 1, except that the type and content of the siloxane compound and the type of resin are appropriately changed as shown in Table 1.

<Example 9>

A resin solution is prepared by mixing and stirring a resin (PC: polycarbonate resin) (trade name TS-2040, manufactured by Teijin Limited) shown in Table 1 with THF (manufactured by FUJIFILM Wako Pure Chemical Corporation) as a solvent such that the solid content of the resin is 15% by weight.

In subsequent steps using this resin solution, a coating liquid obtained by dispersing the particles of the siloxane compound SQ is prepared in the same manner as in Example 1, and a film is formed and obtained using the coating liquid.

<Comparative Example 2>

A film is obtained in the same manner as in Example 1, except that, in the first step, the high-pressure dispersion is changed with stirring using a mixer.

<Measurement and evaluation>

(Measurement of integrated value of statistical quantity L(r) and particle diameter of particles of siloxane compound)

For each of the obtained films, the integrated value of the statistical quantity L(r) and the particle diameter of the particles of the siloxane compound are determined by the above-described method.
The results are shown in Table 1.
In addition, the content of the particles of the siloxane compound is also shown in Table 1.

(Peel strength)

According to the above-described method, the peel strength of the surface of the film of each example at 140°C is measured.
The results are shown in Table 1.
The abbreviations shown in Table 1 are as follows.

-Siloxane compound-

SQ1: Polymethylsilsesquioxane (trade name MSP-N030, manufactured by EIWA CO., LTD., particle diameter of 0.3 μm)

SQ2: polymethylsilsesquioxane (trade name X-52-854, manufactured by Shin-Etsu Chemical Co., Ltd., particle diameter of 0.7 μm)

SQ3: Polymethylsilsesquioxane (trade name KMP-590, manufactured by Shin-Etsu Chemical Co., Ltd., particle diameter of 2.0 μm)

SQ4: Polymethylsilsesquioxane (trade name KMP-591, manufactured by Shin-Etsu Chemical Co., Ltd., particle diameter of 5.0 μm)

SQ5: Silicone particles (trade name KMP-605, manufactured by Shin-Etsu Chemical Co., Ltd., particle diameter of 2.0 μm)

-Resin-

PI: polyimide resin (trade name JIV300R, manufactured by JFE Chemical Co., Ltd.)

PAI: polyamide-imide resin (trade name HPC-9000F-8L, manufactured by Resonac Holdings Corporation)

PC: polycarbonate resin (trade name TS-2040, manufactured by Teijin Limited)

[Table 1]

| | Resin | Siloxane compound | | Physical properties of film | | | Evaluation |
|---|---|---|---|---|---|---|---|
| | Type | Type | Presence or absence of structure represented by Formula: [RSiO1.5]n (R: an organic group, n: an integer of 2 or more, R including one or more alkyl groups) | Integrated value of statistical quantity L(r) | Particle diameter of particles of siloxane compound [μm] | Content of particles of siloxane compound with respect to resin [% by mass] | Peel strength at 140°C [kPa] |
| Example 1 | PI | SQ1 | Y | 1.13 | 0.3 | 9 | 19.7 |
| Example 2 | PI | SQ2 | Y | 1.20 | 0.7 | 9 | 20.1 |
| Example 3 | PI | SQ3 | Y | 1.26 | 2.0 | 9 | 22.2 |
| Example 4 | PI | SQ4 | Y | 1.34 | 5.0 | 9 | 23.8 |
| Example 5 | PI | SQ3 | Y | 1.39 | 2.0 | 0.7 | 23.8 |
| Example 6 | PI | SQ1 | Y | 1.52 | 0.3 | 52 | 21.2 |
| Example 7 | PI | SQ1 | Y | 1.16 | 0.3 | 13 | 20.7 |
| Example 8 | PAI | SQ1 | Y | 1.26 | 0.3 | 9 | 23.1 |
| Example 9 | PC | SQ1 | Y | 1.31 | 0.3 | 9 | 23.6 |
| Comparative Example 1 | PI | SQ5 | N | 1.66 | 2.0 | 9 | 25.1 |
| Comparative Example 2 | PI | SQ3 | Y | 1.71 | 2.0 | 9 | 27.0 |

In Tables 1 and Table 2, in the column of "Presence or absence of structure represented by Formula: $[RSiO_{1.5}]_n$ (R: an organic group, n: an integer of 2 or more, R including one or more alkyl groups)", "Y" means that the structure represented by Formula: $[RSiO_{1.5}]_n$ (R: an organic group, n: an integer of 2 or more, R including one or more alkyl groups) is included, and "N" means that the structure represented by Formula: $[RSiO_{1.5}]_n$ (R: an organic group, n: an integer of 2 or more, R including one or more alkyl groups) is not included.

From the above results, the film of the present example has been found to be a film having a surface which exhibits high oil repellency even in a high temperature environment as compared with the film of the comparative example.

Then, the film of the present example has been found to be able to impart the characteristic of having a surface which exhibits high oil repellency to the outer surface of the member even in a high temperature environment, as compared with the films of the comparative examples, by applying the film to the layer constituting the outer surface of the member.

<Example 11>

(First step)

A solution is prepared in which particles of the siloxane compound SQ of the type shown in Table 2 and carbon black (Special Black 4, manufactured by Degussa AG) are added to a polyamic acid of a polyimide varnish (manufactured by JFE Chemical Corporation, JIV300R, solid content fraction of 18% by mass). The prepared solution is dispersed by a high-pressure collision-type disperser at a dispersion pressure of 100 MPa or more to obtain a coating liquid.

However, the particles of the siloxane compound SQ are added in an amount such that an amount in the obtained film is the content of the particles of the siloxane compound SQ shown in Table 2 (content of the particles of the siloxane compound SQ with respect to the resin). In addition, carbon black (manufactured by Degussa AG, Special Black 4) is added in an amount such that an amount in the obtained film (layer) is the content shown in Table 2 (content of carbon black with respect to the film (layer)).

(Second step)

First, an aluminum cylindrical body is prepared, and the surface of the aluminum cylindrical body is blast-processed to set the surface roughness Ra to 0.5 μm. Subsequently, the surface of the aluminum cylindrical body is coated with a silicone-based release agent (trade name: KS700, manufactured by Shin-Etsu Chemical Co., Ltd.) to a thickness of 2 μm, and subjected baking treatment at 300°C for 1 hour to obtain a cylindrical mold.

The obtained cylindrical mold is coated with a coating liquid by a flow coating method such that the thickness is 180 μm, and a coating film is formed on the cylindrical mold.

(Third step)

While rotating the cylindrical mold on which the coating film has been formed in a horizontal position, the coating film is heated and dried using hot air at 140°C for 30 minutes.

(Fourth step)

The dried coating film is heated for 120 minutes such that the maximum temperature is 320°C to form a resin film, thereby obtaining a belt-shaped film.

The obtained belt-shaped film is peeled off from the cylindrical mold, thereby obtaining an intermediate transfer belt having a volume resistivity of 10.2 LogΩcm and a thickness of 90 μm.

<Examples 11 to 17 and Comparative Example 3>

An intermediate transfer belt is obtained in the same manner as in Example 10, except that the type and content of the siloxane compound and the type of resin are appropriately changed as shown in Table 2.

<Example 18>

A resin solution is prepared by mixing and stirring a resin (PC: polycarbonate resin (trade name TS-2040, manufactured by Teijin Limited)) shown in Table 2 with THF (manufactured by FUJIFILM Wako Pure Chemical Corporation) as a solvent such that the solid content of the resin is 15% by weight.

In subsequent steps using this resin solution, a coating liquid obtained by dispersing the particles of the siloxane compound SQ and the carbon black is prepared in the same manner as in Example 10, and a film is formed using the coating liquid and an intermediate transfer belt is obtained.

<Comparative Example 4>

An intermediate transfer belt is obtained in the same manner as in Example 10, except that, in the first step, the high-pressure dispersion is changed with stirring using a mixer.

<Measurement and evaluation>

(Measurement of integrated value of statistical quantity L(r), particle diameter of particles of siloxane compound, and peel strength)

For each of the obtained intermediate transfer belts, the integrated value of the statistical quantity L(r), the particle diameter of the particles of the siloxane compound, and the peel strength are determined by the above-described method.

The results are shown in Table 2.

In addition, the content of the particles of the siloxane compound and the carbon black is also shown in Table 2.

(Image quality maintainability)

Using a modified machine of DocuCentre Color 400CP (FUJIFILM Business Innovation Corp.) in which each of the obtained intermediate transfer belts has been mounted, paper is output to 1500 kPV, and the transfer image quality is evaluated for every 50 kPV. The output image at this time is a black halftone 50% image, and the output image is visually observed. The image quality is evaluated as image density unevenness by comparing the output image with the event sample image. The modification point in the modified machine is a point at which the rotation speed of the intermediate transfer belt is set to 220 mm/s. In addition, as the paper, a trade name "Leathac 66 (151 g/m$^2$)" of FUJIFILM Business

Innovation Corp. is used. The paper size is A3.

(Cleaning durability)

In the evaluation of the image quality maintenance, the observation of the surface of the intermediate transfer belt is performed for every certain number of output (50 kPV), and the cleaning durability is evaluated based on the state of the adhesion and the degree of the surface abrasion.

[Table 2]

| | Resin | Siloxane compound | | Physical properties of film (layer) | | | | Evaluation | | |
|---|---|---|---|---|---|---|---|---|---|---|
| | Type | Type | Presence or absence of structure represented by Formula: [RSiO1.5]n (R: an organic group, n: an integer of 2 or more, R including one or more alkyl groups) | Integrated value of statistical quantity L(r) | Particle diameter of particles of siloxane compound [μm] | Content of particles of siloxane compound with respect to resin [% by mass] | Content of carbon black [% by mass] | Peel strength at 140°C [kPa] | Image quality maintainability (transferability) | Cleaning durability (including abrasion resistance) |
| Example 10 | PI | SQ1 | Y | 1.18 | 0.3 | 9 | 20 | 19.2 | Image density unevenness does not occur in case of passing paper to 1500 kPV | Adhesion is absent on surface of belt and shape change due to surface abrasion is not observed in case of passing paper to 1500 kPV |
| Example 11 | PI | SQ2 | Y | 1.26 | 0.7 | 9 | 21 | 20.5 | Image density unevenness does not occur in case of passing paper to 1500 kPV | Allowable adhesion in very small amount is present on surface of belt and slight surface abrasion is observed in case of passing paper to 1500 kPV |
| Example 12 | PI | SQ3 | Y | 1.29 | 2 | 9 | 20 | 22.8 | Image density unevenness does not occur in case of passing paper to 1500 kPV | Allowable adhesion in very small amount is present on surface of belt and slight surface abrasion is observed in case of passing paper to 1500 kPV |

(continued)

| | Resin | Siloxane compound | | Physical properties of film (layer) | | | | Evaluation | | |
|---|---|---|---|---|---|---|---|---|---|---|
| | Type | Type | Presence or absence of structure represented by Formula: [RSiO1.5]n (R: an organic group, n: an integer of 2 or more, R including one or more alkyl groups) | Integrated value of statistical quantity L(r) | Particle diameter of particles of siloxane compound [μm] | Content of particles of siloxane compound with respect to resin [% by mass] | Content of carbon black [% by mass] | Peel strength at 140°C [kPa] | Image quality maintainability (transferability) | Cleaning durability (including abrasion resistance) |
| Example 13 | PI | SQ4 | Y | 1.35 | 5 | 9 | 20 | 24.0 | Image density unevenness does not occur in case of passing paper to 1500 kPV | Allowable adhesion in very small amount is present on surface of belt and slight surface abrasion is observed in case of passing paper to 1500 kPV |
| Example 14 | PI | SQ3 | Y | 1.41 | 2 | 0.7 | 18 | 24.1 | Image density unevenness does not occur in case of passing paper to 1500 kPV | Allowable adhesion in very small amount is present on surface of belt and slight surface abrasion is observed in case of passing paper to 1500 kPV |
| Example 15 | PI | SQ1 | Y | 1.57 | 0.3 | 52 | 23 | 21.9 | Image density unevenness does not occur in case of passing paper to 1500 kPV | Allowable adhesion in very small amount is present on surface of belt and slight surface abrasion is observed in case of passing paper to 1500 kPV |

(continued)

| | Resin | Siloxane compound | | Physical properties of film (layer) | | | | Evaluation | | |
|---|---|---|---|---|---|---|---|---|---|---|
| | Type | Type | Presence or absence of structure represented by Formula: [RSiO1.5]n (R: an organic group, n: an integer of 2 or more, R including one or more alkyl groups) | Integrated value of statistical quantity L(r) | Particle diameter of particles of siloxane compound [μm] | Content of particles of siloxane compound with respect to resin [% by mass] | Content of carbon black [% by mass] | Peel strength at 140°C [kPa] | Image quality maintainability (transferability) | Cleaning durability (including abrasion resistance) |
| Example 16 | PI | SQ1 | Y | 1.21 | 0.3 | 13 | 21 | 20.9 | Image density unevenness does not occur in case of passing paper to 1500 kPV | Allowable adhesion in very small amount is present on surface of belt and slight surface abrasion is observed in case of passing paper to 1500 kPV |
| Example 17 | PAI | SQ1 | Y | 1.30 | 0.3 | 9 | 20 | 23.8 | Image density unevenness does not occur in case of passing paper to 1500 kPV | Allowable adhesion in small amount is present on surface of belt and surface abrasion within allowable range is observed in case of passing paper to 1500 kPV |
| Example 18 | PC | SQ1 | Y | 1.35 | 0.3 | 9 | 22 | 24.0 | Image density unevenness does not occur in case of passing paper to 1500 kPV | Allowable adhesion is present on surface of belt and surface abrasion within allowable range is observed in case of passing paper to 1500 kPV |

(continued)

| | Resin | Siloxane compound | | Physical properties of film (layer) | | | | Evaluation | | |
|---|---|---|---|---|---|---|---|---|---|---|
| | Type | Type | Presence or absence of structure represented by Formula: [RSiO1.5]n (R: an organic group, n: an integer of 2 or more, R including one or more alkyl groups) | Integrated value of statistical quantity L(r) | Particle diameter of particles of siloxane compound [μm] | Content of particles of siloxane compound with respect to resin [% by mass] | Content of carbon black [% by mass] | Peel strength at 140°C [kPa] | Image quality maintainability (transferability) | Cleaning durability (including abrasion resistance) |
| Comparative Example 3 | PI | SQ5 | N | 1.78 | 2 | 9 | 21 | 27.1 | Significant decrease in image density unevenness occur in case of passing paper to 50 kPV | Filming due to adhesion exceeding allowable degree occurs on surface of belt and uneven shape due to surface abrasion occurs in case of passing paper to 50 kPV |
| Comparative Example 4 | PI | SQ3 | Y | 1.89 | 2 | 9 | 21 | 30.0 | Decrease in image density unevenness occur in case of passing paper to 150 kPV | Adhesion exceeding allowable degree occurs on surface of belt and uneven shape due to surface abrasion occurs in case of passing paper to 150 kPV |

From the above results, it is found that the intermediate transfer belt of the present example is excellent in transferability and cleaning durability as compared with the intermediate transfer belt of the comparative example. In addition, it is also found that the image forming apparatus including the intermediate transfer belt of the present example is excellent in image quality maintainability as compared with the image forming apparatus including the intermediate transfer belt of the comparative example.

The present exemplary embodiment includes the following aspects.

(((1))) A film comprising:

a resin; and
particles of a siloxane compound having a structure represented by Formula: $[RSiO_{1.5}]_n$ (in the formula, R represents an organic group and n represents an integer of 2 or more), where at least one R in the formula is a group including an alkyl group,
wherein in a spatial distribution of the particles present in an evaluation region of 63 μm × 42 μm, an integrated value of a statistical quantity L(r) represented by Equation (1) in an interparticle distance r of 0.05 μm or more and 5.00 μm or less is 0 or more and 1.6 or less.

$$L(r) := \sqrt{K(r)/\pi} - r \qquad (1)$$

In Equation (1), r represents the interparticle distance, and K(r) represents a Ripley's K function K(r) represented by Equation (2).

$$K(r) := \frac{\sum_{i \neq j}^{N} 1(|X_i - X_j| \leq r)/s(|X_i - X_j|)}{\lambda^2} \qquad (2)$$

In Equation (2), $1(|X_i - X_j| \leq r)$ represents an indicator function, $X_i$ and $X_j$ represent coordinates of points i and j respectively, $|X_i - X_j|$ represents a Euclidean distance between the coordinates $X_i$ and $X_j$, r represents the interparticle distance, $s(|X_i - X_j|)$ represents an edge correction factor s(x) of an evaluation region represented by Equation (3), x equals $|X_i - X_j|$, N represents a total number of particles in the evaluation region, and λ represents a number density of particles in the evaluation region.

$$s(x) := L_x L_y - \tfrac{x}{\pi}(2L_x + 2L_y - x) \qquad (3)$$

In Equation (3), $L_x$ and $L_y$ represent lengths (μm) of sides of the evaluation region in an x-axis direction and a y-axis direction respectively, and $x = |X_i - X_j|$ is satisfied, where the $X_i$ and the $X_j$ represent coordinates of points i and j respectively, and the $|X_i - X_j|$ represents a Euclidean distance between the coordinates $X_i$ and $X_j$.

(((2))) The film according to (((1))),
wherein an average particle diameter of the particles is 0.05 μm or more and 3.0 μm or less.
(((3))) The film according to (((2))),
wherein the average particle diameter of the particles is 0.05 μm or more and 1.0 μm or less.
(4) The film according to (((1))),
wherein a content of the particles is 1% by mass or more and 50% by mass or less with respect to a mass of the resin.
(((5))) The film according to (((4))),
wherein the content of the particles is 1% by mass or more and 10% by mass or less with respect to the mass of the resin.
(((6))) The film according to any one of (((1))) to (((5))),
wherein a peel strength of a surface at 140°C is 24 kPa or less.
(((7))) A member comprising:

the film according to any one of (((1))) to (((6))) as a layer constituting an outer surface of the member.
(((8))) A transfer member comprising:

the film according to any one of (((1))) to (((6))) as a layer constituting an outer surface of the transfer member, wherein the film further contains conductive particles.

(((9))) A fixing device comprising:

a first rotary member; and
a second rotary member that is disposed to be in contact with an outer surface of the first rotary member, wherein at least one of the first rotary member or the second rotary member is constituted of the member according to (((7))).

(((10))) An image forming apparatus comprising:

an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
a transfer device that transfers the toner image onto a surface of a recording medium; and
the fixing device according to (((9))) that fixes the toner image on the surface of the recording medium.

(((11))) A transfer device comprising:

an intermediate transfer body that is constituted of the member according to (((7))) and has an outer peripheral surface to which a toner image is transferred;
a primary transfer device in which a toner image formed on a surface of an image holder is primarily transferred to a surface of the intermediate transfer body; and
a secondary transfer device in which the toner image transferred to the surface of the intermediate transfer body is secondarily transferred to a surface of a recording medium.

(((12))) A transfer device comprising:

an intermediate transfer body that is constituted of the transfer member according to (((8))) and has an outer peripheral surface to which a toner image is transferred;
a primary transfer device in which a toner image formed on a surface of an image holder is primarily transferred to a surface of the intermediate transfer body; and
a secondary transfer device in which the toner image transferred to the surface of the intermediate transfer body is secondarily transferred to a surface of a recording medium.

(((13))) An image forming apparatus comprising:

an image holder;
a charging device that charges a surface of the image holder;
an electrostatic latent image forming device that forms an electrostatic latent image on the charged surface of the image holder;
a developing device that accommodates a developer containing a toner and develops the electrostatic latent image formed on the surface of the image holder with the developer to form a toner image;
the transfer device according to (((11))) or (((12))) that transfers the toner image onto a surface of a recording medium; and
a fixing device that fixes the toner image on the surface of the recording medium.

The effects of the above-described aspects are as follows.
According to (((1))), there is provided a film including a resin, and particles of a siloxane compound having a structure represented by Formula: $[RSiO_{1.5}]_n$ (in the formula, R represents an organic group and n represents an integer of 2 or more), where at least one R in the formula is a group including an alkyl group, in which a surface of the film exhibits high

oil repellency even in a high temperature environment as compared with a case where, in a spatial distribution of the particles present in an evaluation region of 63 $\mu$m × 42 $\mu$m, an integrated value of a statistical quantity L(r) represented by Equation (1) in an interparticle distance r of 0.05 $\mu$m or more and 5.00 $\mu$m or less is more than 1.6.

According to (((2))), there is provided a film in which a surface exhibits high oil repellency even in a high temperature environment as compared with a case where the average particle diameter of the particles is more than 3.0 $\mu$m.

According to (((3))), there is provided a film in which a surface exhibits high oil repellency even in a high temperature environment as compared with a case where the average particle diameter of the particles is more than 1.0 $\mu$m and 3.0 $\mu$m or less.

According to (((4))), there is provided a film in which a surface exhibits high oil repellency even in a high temperature environment as compared with a case where the content of the particles with respect to the resin is more than 50% by mass.

According to (((5))), there is provided a film in which a surface exhibits high oil repellency even in a high temperature environment as compared with a case where the content of the particles with respect to the resin is more than 10% by mass and 50% by mass or less.

According to (((6))), there is provided a film in which a surface exhibits high oil repellency even in a high temperature environment as compared with a case where the peeling force of the surface of the film at 140°C is more than 24 kPa.

According to (((7))), (((8))), (((9))), (((10))), (((11))), (((12))), and (((13))), there is provided; a member or a transfer member including a resin, and particles of a siloxane compound having a structure represented by Formula: $[RSiO_{1.5}]_n$ (in the formula, R represents an organic group and n represents an integer of 2 or more), where at least one R in the formula is a group including an alkyl group, in which a surface of the film exhibits high oil repellency even in a high temperature environment as compared with a case where, in a spatial distribution of the particles present in an evaluation region of 63 $\mu$m × 42 $\mu$m, an integrated value of a statistical quantity L(r) represented by Equation (1) in an interparticle distance r of 0.05 $\mu$m or more and 5.00 $\mu$m or less is more than 1.6; a transfer device and an image forming apparatus including the intermediate transfer body constituted of the member or the transfer member; and a fixing device and an image forming apparatus including a rotary member constituted of the member.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its pratical applicatons, thereby enabling others skilled in the art to understand the invention for various embodiments and with the various modifications as are suited to the particular use contemplated. It is intended that the scope of the invention be defined by the appended claims.

Brief Description of the Reference Symbols

60: fixing device
62: pressure belt
63: belt traveling guide
64: pressing pad
64a: front sandwiching member
64b: peeling sandwiching member
65: holding member
66: halogen lamp
68: sliding member
69: thermosensitive element
70: peeling member
71: peeling claw
72: holding member
80: fixing device
82: sliding member
84: heating belt
86: fixing belt module
88: pressure roll
89A: halogen heater

89: heating and pressing roll
90A: halogen heater
90: support roll
92A: halogen heater
92: support roll
94: posture correction roll
96: support member
98: support roll
100: image forming apparatus
200: fixing device
211: pressure roll
212: electromagnetic induction heating device

## Claims

**1.** A film comprising:

a resin; and
particles of a siloxane compound having a structure represented by Formula: $[RSiO_{1.5}]_n$, wherein R represents an organic group and n represents an integer of 2 or more, and at least one R in the formula is a group including an alkyl group,
wherein the particles of the siloxane compound are dispersed in the resin,
the film being **characterized in that**:

a dispersion state of the particles of the siloxane compound in a spatial distribution of the particles of the siloxane compound present in an evaluation region of 63 μm × 42 μm satisfies an integrated value of a statistical quantity L(r) in a range of 0 or more and 1.6 or less, wherein the integrated value of the statistical quantity L(r) is represented by Equation (1) in an interparticle distance r of 0.05 μm or more and 5.00 μm or less,

$$L(r) := \sqrt{K(r)/\pi} - r \qquad (1)$$

in Equation (1), r represents the interparticle distance, and K(r) represents a Ripley's K function K(r) represented by Equation (2),

$$K(r) := \frac{\sum_{i \neq j}^{N} 1(|X_i - X_j| \leq r)/s(|X_i - X_j|)}{\lambda^2} \qquad (2)$$

in Equation (2), $1(|X_i - X_j| \leq r)$ represents an indicator function, $X_i$ and $X_j$ represent coordinates of points i and j respectively, $|X_i - X_j|$ represents a Euclidean distance between the coordinates $X_i$ and $X_j$, r represents the interparticle distance, $s(|X_i - X_j|)$ represents an edge correction factor s(x) of an evaluation region represented by Equation (3), x equals $|X_i - X_j|$, N represents a total number of the particles of the siloxane compound in the evaluation region, and λ represents a number density of the particles of the siloxane compound in the evaluation region,

$$s(x) := L_x L_y - \tfrac{x}{\pi}(2L_x + 2L_y - x) \qquad (3)$$

in Equation (3), $L_x$ and $L_y$ represent lengths (μm) of sides of the evaluation region in an x-axis direction and a

y-axis direction respectively, and $x = |X_i - X_j|$ is satisfied, where the $X_i$ and the $X_j$ represent coordinates of points i and j respectively, and the $|X_i - X_j|$ represents a Euclidean distance between the coordinates $X_i$ and $X_j$.

**2.** The film according to claim 1,
wherein a content of the particles is 1% by mass or more and 50% by mass or less with respect to a mass of the resin.

**3.** The film according to claim 2,
wherein the content of the particles is 1% by mass or more and 10% by mass or less with respect to the mass of the resin.

**4.** The film according to any one of claims 1 to 3,
wherein a peel strength of a surface at 140°C is 24 kPa or less.

**5.** A member (61, 62) comprising:
the film according to any one of claims 1 to 4 as a layer constituting an outer surface of the member (61, 62).

**6.** A transfer member (61, 62) comprising:

the film according to any one of claims 1 to 4 as a layer constituting an outer surface of the transfer member (61, 62),
wherein the film further contains conductive particles.

**7.** A fixing device (60) comprising:

a first rotary member (61); and
a second rotary member (62) that is disposed to be in contact with an outer surface of the first rotary member (61),
wherein at least one of the first rotary member (61) or the second rotary member (62) is constituted of the member (61, 62) according to claim 5.

**8.** An image forming apparatus (100) comprising:

an image holder (11);
a charging device (12) that charges a surface of the image holder (11);
an electrostatic latent image forming device (13) that forms an electrostatic latent image on the charged surface of the image holder (11);
a developing device (14) that accommodates a developer containing a toner and develops the electrostatic latent image formed on the surface of the image holder (11) with the developer to form a toner image;
a transfer device (10, 15, 20) that transfers the toner image onto a surface of a recording medium (K); and
the fixing device (60) according to claim 7 that fixes the toner image on the surface of the recording medium (K).

**9.** A transfer device (10, 15, 20) comprising:

an intermediate transfer body (15) that is constituted of the member (61, 62) according to claim 5 and has an outer peripheral surface to which a toner image is transferred;
a primary transfer device (10) in which a toner image formed on a surface of an image holder (11) is primarily transferred to a surface of the intermediate transfer body (15); and
a secondary transfer device (20) in which the toner image transferred to the surface of the intermediate transfer body (15) is secondarily transferred to a surface of a recording medium (K).

**10.** A transfer device (10, 15, 20) comprising:

an intermediate transfer body (15) that is constituted of the transfer member (61, 62) according to claim 6 and has an outer peripheral surface to which a toner image is transferred;
a primary transfer device (10) in which a toner image formed on a surface of an image holder is primarily transferred to a surface of the intermediate transfer body (15); and
a secondary transfer device (20) in which the toner image transferred to the surface of the intermediate transfer body (15) is secondarily transferred to a surface of a recording medium (K).

**11.** An image forming apparatus (100) comprising:

an image holder (11);
a charging device (12) that charges a surface of the image holder (11);
an electrostatic latent image forming device (13) that forms an electrostatic latent image on the charged surface of the image holder (11);
a developing device (14) that accommodates a developer containing a toner and develops the electrostatic latent image formed on the surface of the image holder (11) with the developer to form a toner image;
the transfer device (10, 15, 20) according to claim 9 or 10 that transfers the toner image onto a surface of a recording medium (K); and
a fixing device (60) that fixes the toner image on the surface of the recording medium (K).

## Patentansprüche

**1.** Film, umfassend:

ein Harz; und
Partikel einer Siloxanverbindung mit einer Struktur, die durch Formel: $[RSiO_{1,5}]_n$ dargestellt wird, wobei R eine organische Gruppe darstellt und n eine ganze Zahl von 2 oder größer darstellt und mindestens ein R in der Formel eine Gruppe ist, die eine Alkylgruppe enthält,
wobei die Partikel der Siloxanverbindung in dem Harz dispergiert sind,
wobei der Film **dadurch gekennzeichnet ist, dass**:

ein Dispersionzustand der Partikel der Siloxanverbindung in einer räumlichen Verteilung der Partikel der Siloxanverbindung, die in einem Bewertungsbereich von 63 μm × 42 μm vorhanden ist, einen integrierten Wert einer statistischen Größe L(r) in einem Bereich von 0 oder mehr und 1,6 oder weniger erfüllt, wobei der integrierte Wert der statistischen Größe L(r) durch Gleichung (1) in einem Interpartikelabstand r von 0,05 μm oder mehr und 5,00 μm oder weniger dargestellt wird,

$$L(r) := \sqrt{K(r)/\pi} - r \quad (1)$$

in Gleichung (1) r den Interpartikelabstand darstellt und K(r) eine Ripley-K-Funktion K(r) darstellt, die durch Gleichung (2) dargestellt wird,

$$K(r) := \frac{\sum_{i \neq j}^{N} 1(|X_i - X_j| \leq r) / s(|X_i - X_j|)}{\lambda^2} \quad (2)$$

in Gleichung (2) $1(|X_i - X_j| \leq r)$ eine Indikatorfunktion darstellt, $X_i$ und $X_j$ entsprechend Koordinaten von Punkten i und j darstellen, $|X_i - X_j|$ einen euklidischen Abstand zwischen den Koordinaten $X_i$ und $X_j$ darstellt, r den Interpartikelabstand darstellt, $s(|X_i - X_j|)$ einen Randkorrekturfaktor s(x) eines Bewertungsbereichs, der durch Gleichung (3) dargestellt wird, darstellt, x gleich $|X_i - X_j|$ ist, N eine Gesamtanzahl der Partikel der Siloxanverbindung in dem Bewertungsbereich darstellt und λ eine Anzahldichte der Partikel der Siloxanverbindung in dem
Bewertungsbereich darstellt,

$$s(x) := L_x L_y - \frac{x}{\pi}(2L_x + 2L_y - x) \quad (3)$$

in Gleichung (3) $L_x$ und $L_y$ entsprechend Längen (μm) von Seiten des Bewertungsbereichs in einer x-Achsenrichtung und einer y-Achsenrichtung darstellen und $x = |X_i - X_j|$ erfüllt ist, wobei die $X_i$ und die $X_j$ entsprechend Koordinaten von Punkten i und j darstellen und die $|X_i - X_j|$ einen euklidischen Abstand zwischen den Koordinaten $X_i$ und $X_j$ darstellt.

**2.** Film nach Anspruch 1,
wobei ein Gehalt der Partikel 1 Massen-% oder mehr und 50 Massen-% oder weniger in Bezug auf eine Masse des Harzes beträgt.

**3.** Film nach Anspruch 2,
wobei der Gehalt der Partikel 1 Massen-% oder mehr und 10 Massen-% oder weniger in Bezug auf die Masse des Harzes beträgt.

**4.** Film nach einem der Ansprüche 1 bis 3,
wobei eine Ablösefestigkeit einer Oberfläche bei 140 °C 24 kPa oder weniger beträgt.

**5.** Element (61, 62), umfassend:
den Film nach einem der Ansprüche 1 bis 4 als eine Schicht, die eine Außenoberfläche des Elements (61, 62) bildet.

**6.** Übertragungselement (61, 62), umfassend:

den Film nach einem der Ansprüche 1 bis 4 als eine Schicht, die eine Außenoberfläche des Übertragungselements (61, 62) bildet,
wobei der Film ferner leitfähige Partikel enthält.

**7.** Befestigungsvorrichtung (60), umfassend:

ein erstes Drehelement (61); und
ein zweites Drehelement (62), das so angeordnet ist, dass es mit einer Außenoberfläche des ersten Drehelements (61) in Kontakt steht,
wobei mindestens eines von dem ersten Drehelement (61) und dem zweiten Drehelement (62) aus dem Element (61, 62) nach Anspruch 5 gebildet ist.

**8.** Bilderzeugungsvorrichtung (100), umfassend:

einen Bildhalter (11);
eine Ladevorrichtung (12), die eine Oberfläche des Bildhalters (11) lädt;
eine Erzeugungsvorrichtung (13) für elektrostatisches Latentbild, die ein elektrostatisches Latentbild auf der geladenen Oberfläche des Bildhalters (11) erzeugt;
eine Entwicklungsvorrichtung (14), die einen Entwickler, der einen Toner enthält, aufnimmt und das elektrostatische Latentbild, das auf der Oberfläche des Bildhalters (11) erzeugt wird, mit dem Entwickler entwickelt, um ein Tonerbild zu erzeugen;
eine Übertragungsvorrichtung (10, 15, 20), die das Tonerbild auf eine Oberfläche eines Aufzeichnungsmediums (K) überträgt; und
die Befestigungsvorrichtung (60) nach Anspruch 7, die das Tonerbild auf der Oberfläche des Aufzeichnungsmediums (K) befestigt.

**9.** Übertragungsvorrichtung (10, 15, 20), umfassend:

einen Zwischenübertragungskörper (15), der aus dem Element (61, 62) nach Anspruch 5 gebildet ist und eine Außenumfangsfläche, auf die ein Tonerbild übertragen wird, aufweist;
eine Primärübertragungsvorrichtung (10), bei der ein Tonerbild, das auf einer Oberfläche eines Bildhalters (11) erzeugt wird, primär auf eine Oberfläche des Zwischenübertragungskörpers (15) übertragen wird; und
eine Sekundärübertragungsvorrichtung (20), bei der das Tonerbild, das auf die Oberfläche des Zwischenübertragungskörpers (15) übertragen wird, sekundär auf eine Oberfläche eines Aufzeichnungsmediums (K) übertragen wird.

**10.** Übertragungsvorrichtung (10, 15, 20), umfassend:

einen Zwischenübertragungskörper (15), der aus dem Übertragungselement (61, 62) nach Anspruch 6 gebildet ist und eine Außenumfangsfläche, auf die ein Tonerbild übertragen wird, aufweist;
eine Primärübertragungsvorrichtung (10), bei der ein Tonerbild, das auf einer Oberfläche eines Bildhalters erzeugt wird, primär auf eine Oberfläche des Zwischenübertragungskörpers (15) übertragen wird; und
eine Sekundärübertragungsvorrichtung (20), bei der das Tonerbild, das auf die Oberfläche des Zwischenübertragungskörpers (15) übertragen wird, sekundär auf eine Oberfläche eines Aufzeichnungsmediums (K) übertragen wird.

**11.** Bilderzeugungsvorrichtung (100), umfassend:

einen Bildhalter (11);
eine Ladevorrichtung (12), die eine Oberfläche des Bildhalters (11) lädt;
eine Erzeugungsvorrichtung (13) für elektrostatisches Latentbild, die ein elektrostatisches Latentbild auf der geladenen Oberfläche des Bildhalters (11) erzeugt;
eine Entwicklungsvorrichtung (14), die einen Entwickler, der einen Toner enthält, aufnimmt und das elektrostatische Latentbild, das auf der Oberfläche des Bildhalters (11) erzeugt wird, mit dem Entwickler entwickelt, um ein Tonerbild zu erzeugen;
die Übertragungsvorrichtung (10, 15, 20) nach Anspruch 9 oder 10, die das Tonerbild auf eine Oberfläche eines Aufzeichnungsmediums (K) überträgt; und
eine Befestigungsvorrichtung (60), die das Tonerbild auf der Oberfläche des Aufzeichnungsmediums (K) befestigt.

## Revendications

**1.** Film comprenant :

une résine ; et
des particules d'un composé de siloxane ayant une structure représentée par Formule : $[RSiO_{1.5}]_n$, où R représente un groupe organique et n représente un entier de 2 ou plus, et au moins un R dans la formule est un groupe incluant un groupe alkyle,
dans lequel les particules du composé de siloxane sont dispersées dans la résine,
le film étant **caractérisé en ce que** :

un état de dispersion des particules du composé de siloxane dans une distribution spatiale des particules du composé de siloxane présentes dans une région d'évaluation de 63 $\mu$m $\times$ 42 $\mu$m satisfait une valeur intégrée d'une quantité statistique L(r) dans une plage de 0 ou plus et 1,6 ou moins, où la valeur intégrée de la quantité statistique L(r) est représentée par Équation (1) dans une distance interparticulaire r de 0,05 $\mu$m ou plus et 5,00 $\mu$m ou moins,

$$L(r) := \sqrt{K(r)/\pi} - r \qquad (1)$$

dans Équation (1), r représente la distance interparticulaire, et K(r) représente une fonction K de Ripley K(r) représentée par Équation (2),

$$K(r) := \frac{\sum_{i \neq j}^{N} 1(|X_i - X_j| \leq r)/s(|X_i - X_j|)}{\lambda^2} \qquad (2)$$

dans Équation (2), $1(|X_i - X_j| \leq r)$ représente une fonction indicatrice, $X_i$ et $X_j$ représentent des coordonnées des points i et j respectivement, $|X_i - X_j|$ représente une distance euclidienne entre les coordonnées $X_i$ et $X_j$, r

représente la distance interparticulaire, $s(|X_i - X_j|)$ représente un facteur de correction de bord s(x) d'une région d'évaluation représentée par Équation (3), x est égal à $|X_i - X_j|$, N représente un nombre total des particules du composé de siloxane dans la région d'évaluation, et

$\lambda$ représente une densité numérique des particules du composé de siloxane dans la région d'évaluation,

$$s(x) := L_x L_y - \frac{x}{\pi}(2L_x + 2L_y - x) \quad (3)$$

dans Équation (3), $L_x$ et $L_y$ représentent des longueurs ($\mu$m) de côtés de la région d'évaluation dans une direction d'axe x et une direction d'axe y respectivement, et $x = |X_i - X_j|$ est satisfait, où $X_i$ et $X_j$ représentent des coordonnées des points i et j respectivement, et $|X_i - X_j|$ représente une distance euclidienne entre les coordonnées $X_i$ et $X_j$.

**2.** Film selon la revendication 1,
dans lequel une teneur en particules est de 1 % en masse ou plus et de 50 % en masse ou moins par rapport à une masse de la résine.

**3.** Film selon la revendication 2,
dans lequel la teneur en particules est de 1 % en masse ou plus et de 10 % en masse ou moins par rapport à la masse de la résine.

**4.** Film selon l'une quelconque des revendications 1 à 3,
dans lequel une force de pelage d'une surface à 140 °C est de 24 kPa ou moins.

**5.** Élément (61, 62) comprenant :
le film selon l'une quelconque des revendications 1 à 4 en tant que couche constituant une surface extérieure de l'élément (61, 62).

**6.** Élément de transfert (61, 62) comprenant :

le film selon l'une quelconque des revendications 1 à 4 en tant que couche constituant une surface extérieure de l'élément de transfert (61, 62),
dans lequel le film contient en outre des particules conductrices.

**7.** Dispositif de fixation (60) comprenant :

un premier élément rotatif (61) ; et
un deuxième élément rotatif (62) qui est disposé de manière à être en contact avec une surface extérieure du premier élément rotatif (61),
dans lequel au moins l'un du premier élément rotatif (61) et du deuxième élément rotatif (62) est constitué de l'élément (61, 62) selon la revendication 5.

**8.** Appareil de formation d'images (100) comprenant :

un support d'images (11) ;
un dispositif de charge (12) qui charge une surface du support d'images (11) ;
un dispositif de formation d'images latentes électrostatiques (13) qui forme une image latente électrostatique sur la surface chargée du support d'images (11) ;
un dispositif de développement (14) qui contient un révélateur contenant un toner et développe l'image latente électrostatique formée sur la surface du support d'images (11) avec le révélateur pour former une image de toner ;
un dispositif de transfert (10, 15, 20) qui transfère l'image de toner sur une surface d'un support d'enregistrement (K) ; et
le dispositif de fixation (60) selon la revendication 7 qui fixe l'image de toner sur la surface du support d'enregistrement (K).

**9.** Dispositif de transfert (10, 15, 20) comprenant :

un corps de transfert intermédiaire (15) qui est constitué de l'élément (61, 62) selon la revendication 5 et comporte une surface périphérique extérieure sur laquelle une image de toner est transférée ;
un dispositif de transfert primaire (10) dans lequel une image de toner formée sur une surface d'un support d'images (11) est transférée principalement sur une surface du corps de transfert intermédiaire (15) ; et
un dispositif de transfert secondaire (20) dans lequel l'image de toner transférée sur la surface du corps de transfert intermédiaire (15) est transférée secondairement sur une surface d'un support d'enregistrement (K).

**10.** Dispositif de transfert (10, 15, 20) comprenant :

un corps de transfert intermédiaire (15) qui est constitué de l'élément de transfert (61, 62) selon la revendication 6 et comporte une surface périphérique extérieure sur laquelle une image de toner est transférée ;
un dispositif de transfert primaire (10) dans lequel une image de toner formée sur une surface d'un support d'images est transférée principalement sur une surface du corps de transfert intermédiaire (15) ; et
un dispositif de transfert secondaire (20) dans lequel l'image de toner transférée sur la surface du corps de transfert intermédiaire (15) est transférée secondairement sur une surface d'un support d'enregistrement (K).

**11.** Appareil de formation d'images (100) comprenant :

un support d'images (11) ;
un dispositif de charge (12) qui charge une surface du support d'images (11) ;
un dispositif de formation d'images latentes électrostatiques (13) qui forme une image latente électrostatique sur la surface chargée du support d'images (11) ;
un dispositif de développement (14) qui contient un révélateur contenant un toner et développe l'image latente électrostatique formée sur la surface du support d'images (11) avec le révélateur pour former une image de toner ;
le dispositif de transfert (10, 15, 20) selon la revendication 9 ou la revendication 10 qui transfère l'image de toner sur une surface d'un support d'enregistrement (K) ; et
un dispositif de fixation (60) qui fixe l'image de toner sur la surface du support d'enregistrement (K).

FIG. 1

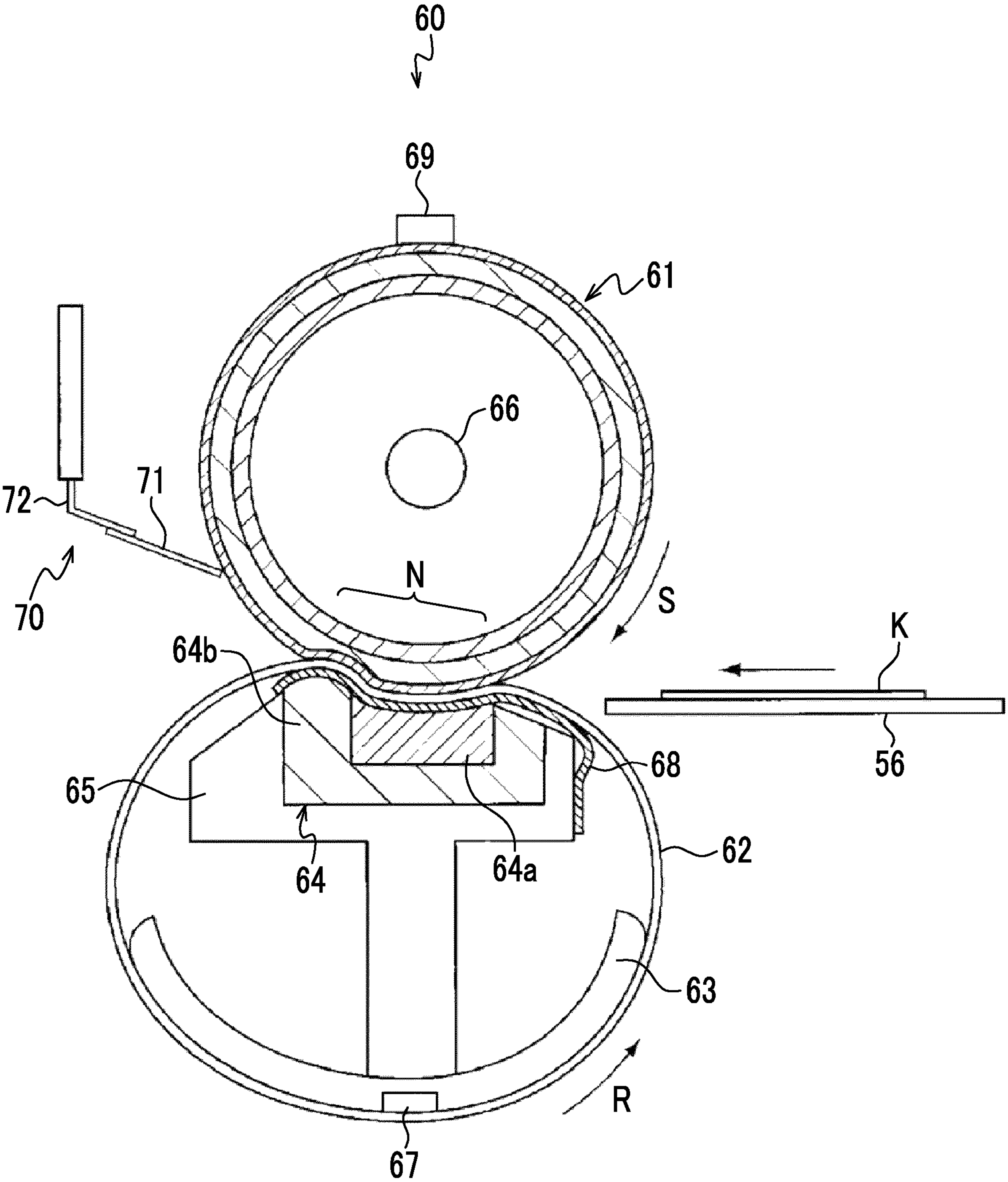

FIG. 2

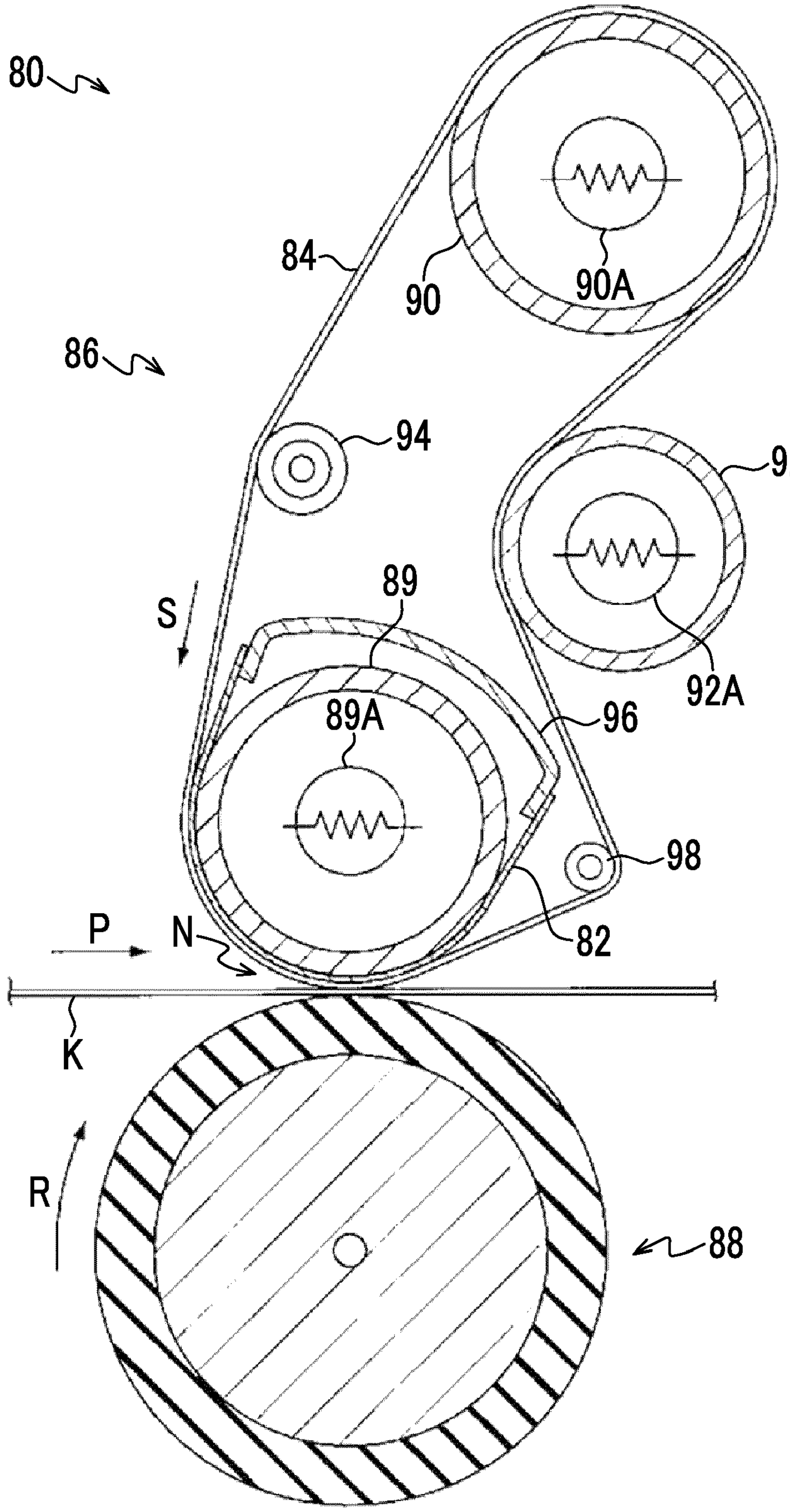

FIG. 3

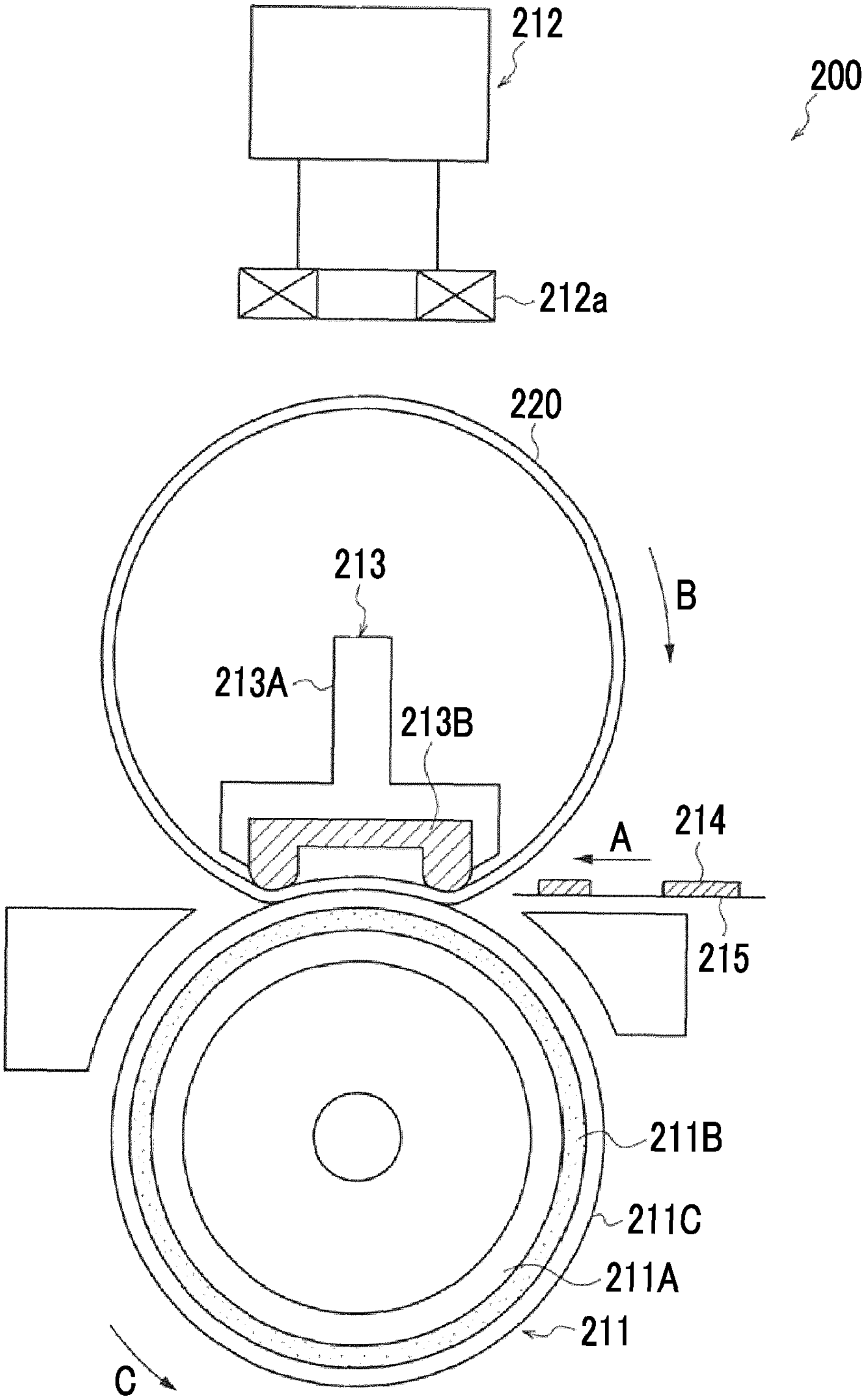

FIG. 4

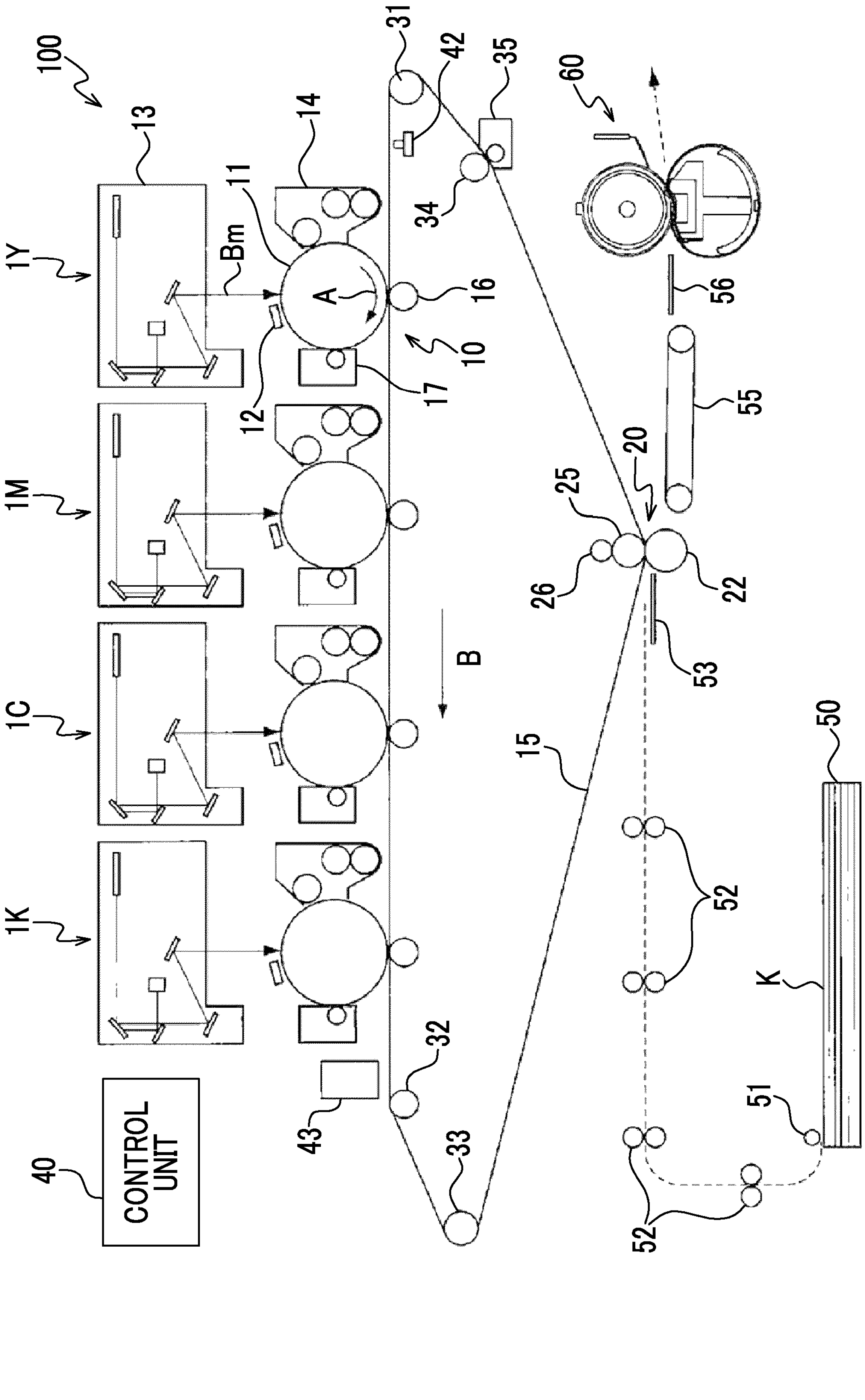
100
1Y
1M
1C
1K
13
14
11
Bm
A
12
16
17
10
B
31
42
35
34
60
56
55
20
25
26
22
53
15
50
52
K
51
32
33
43
40
CONTROL UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010262290 A
- JP 2017097279 A
- US 2012257914 A1